# EUROPÄISCHE PATENTSCHRIFT

(11) **EP 3 698 121 B1**
(45) Veröffentlichungstag und Bekanntmachung des Hinweises auf die Patenterteilung: **18.02.2026**
(21) Anmeldenummer: 18789110.6
(22) Anmeldetag: 16.10.2018
(51) Int. Cl.: G01N 3/42

(54) **VORRICHTUNG UND VERFAHREN ZUR AUTOMATISCHEN WERKSTÜCKPRÜFUNG**
DEVICE AND METHOD FOR AUTOMATIC WORKPIECE INSPECTION
DISPOSITIF ET PROCÉDÉ DE VÉRIFICATION AUTOMATIQUE DE PIÈCES

(30) Priorität: 16.10.2017 DE 102017124051; 22.03.2018 DE 102018106913
(43) Veröffentlichungstag der Anmeldung: 26.08.2020
(73) Patentinhaber: Imprintec GmbH, 44799 Bochum (DE)
(72) Erfinder: SCHMALING, Benjamin, 58339 Breckerfeld (DE); ANDERSECK, Ralf, 45481 Mühlheim (DE); LINDNER, Karl-Heinz, 45481 Mülheim (DE); ZOK, Peter, 45525 Hattingen (DE)
(74) Vertreter: Bals & Vogel Patentanwälte PartGmbB
(86) Internationale Anmeldenummer: PCT/EP2018/078289
(87) Internationale Veröffentlichungsnummer: WO 2019/076923

(56) Entgegenhaltungen:
- EP-A1- 2 239 556
- EP-A1- 2 239 556
- EP-A1- 2 239 556
- WO-A1-2012/168404
- DE-A1- 4 022 382
- GB-A- 2 525 857
- GB-A- 2 525 857
- GB-A- 2 525 857
- GB-A- 703 193
- GB-A- 703 193
- GB-A- 703 193
- GB-A- 746 987
- GB-A- 746 987
- GB-A- 746 987
- JP-A- H0 915 128
- JP-A- H0 915 128
- JP-A- H0 915 128
- US-A- 2 491 667
- US-A- 2 491 667
- US-A- 2 491 667
- US-A- 5 305 633
- US-A- 5 305 633
- US-A- 5 305 633
- US-A1- 2010 107 745
- US-A1- 2010 107 745
- US-A1- 2010 107 745
- US-A1- 2013 047 712
- US-A1- 2013 047 712
- US-A1- 2013 047 712
- US-A1- 2014 267 679
- MARTEAU J. ET AL: "Reflection on the measurement and use of the topography of the indentation imprint", SCANNING., vol. 36, no. 1, 19 June 2013 (2013-06-19), US, pages 115 - 126, XP055941095, ISSN: 0161-0457, Retrieved from the Internet <URL:https://api.wiley.com/onlinelibrary/tdm/v1/articles/10.1002%2Fsca.21107> DOI: 10.1002/sca.21107
- MERCIER DAVID: "Getting started - NIMS toolbox 3.2.0 documentation", 12 January 2017 (2017-01-12), pages 1 - 4, XP055941299, Retrieved from the Internet <URL:https://web.archive.org/web/20170112025434/http://nims.readthedocs.io/en/latest/getting_started.html> [retrieved on 20220712]
- MERCIER DAVID: "Links and References - NIMS toolbox 3.2.0 documentation", 12 January 2017 (2017-01-12), pages 1 - 8, XP055941280, Retrieved from the Internet <URL:https://web.archive.org/web/20170112104330/http://nims.readthedocs.io:80/en/latest/links_ref.html> [retrieved on 20220712]
- MARTEAU J. ET AL: "Reflection on the measurement and use of the topography of the indentation imprint", SCANNING., vol. 36, no. 1, 19 June 2013 (2013-06-19), US, pages 115 - 126, XP055941095, ISSN: 0161-0457, Retrieved from the Internet <URL:https://api.wiley.com/onlinelibrary/tdm/v1/articles/10.1002%2Fsca.21107> DOI: 10.1002/sca.21107
- MERCIER DAVID: "Getting started - NIMS toolbox 3.2.0 documentation", 12 January 2017 (2017-01-12), pages 1 - 4, XP55941299, Retrieved from the Internet <URL:https://web.archive.org/web/20170112025434/http://nims.readthedocs.io/en/latest/getting_started.html> [retrieved on 20220712]
- MERCIER DAVID: "Links and References - NIMS toolbox 3.2.0 documentation", 12 January 2017 (2017-01-12), pages 1 - 8, XP55941280, Retrieved from the Internet <URL:https://web.archive.org/web/20170112104330/http://nims.readthedocs.io:80/en/latest/links_ref.html> [retrieved on 20220712]

## Beschreibung

Die Erfindung betrifft eine Messvorrichtung zur Ermittlung von mechanischen Eigenschaften einer Werkstückprobe gemäß des unabhängigen Vorrichtungsanspruchs sowie ein Verfahren zur Ermittlung von mechanischen Eigenschaften einer Werkstückprobe gemäß dem unabhängigen Verfahrensanspruch. Darüber hinaus betrifft die Erfindung ein Computerprogrammprodukt für eine Messvorrichtung zur Ermittlung von mechanischen Eigenschaften einer Werkstückprobe.

Prinzipiell sind Messvorrichtungen zur Ermittlung von mechanischen Eigenschaften einer Werkstückprobe bekannt. Dabei kann zwischen zerstörungsfreier und zerstörender Werkstoffprüfung unterschieden werden. Die Messvorrichtungen aus dem Stand der Technik weisen jedoch aufwendige und kostenintensive Messapparaturen auf, wobei darüber hinaus immer ein manueller Eingriff durch ein Bedienpersonal nötig ist, damit die Werkstoffprüfung entsprechend qualitative Messergebnisse liefert. Vielfach sind auch mehrere baulich getrennte Messvorrichtungen notwendig, um die gewünschten Messverfahren ausüben zu können. Eine sogenannte online-Messung oder inline-Messung im laufenden Herstellungsbetrieb ist insbesondere mit der zerstörenden Werkstoffprüfung nicht möglich. Aber auch die zerstörungsfreie oder zerstörungsarme Werkstoffprüfung erfordert im laufenden Herstellungsbetrieb kurze Prüfzeiten, damit der laufende Herstellungsprozess nicht unterbrochen oder verzögert wird. US 2013/047712 A1, MARTEAU J. ET AL: "Reflection on the measurement and use of the topography of the indentation imprint", SCANNING., Bd. 36, Nr. 1, 19. Juni 2013, Seiten 115-126 und Mercier David: "Getting started - NIMS toolbox 3.2.0 documentation", 12. Januar 2017 (2017-01-12), Seiten 1-4 und "Links and References - NIMS toolbox 3.2.0 documentation", 12. Januar 2017 (2017-01-12), Seiten 1-8, zeigen bekannte Systeme und Verfahren.

Es ist Aufgabe der Erfindung, diese aus dem Stand der Technik bekannten Nachteile zumindest tlw. zu beheben. Insbesondere ist es die Aufgabe der vorliegenden Erfindung, eine Werkstoffprüfung, insbesondere eine zerstörungsfreie und/oder zerstörungsarme Werkstoffprüfung, vorzugsweise im laufenden Herstellungsprozess, mit nur einer Messvorrichtung, zu ermöglichen, wobei vorzugsweise das entsprechende Messverfahren im Wesentlichen automatisiert durchführbar ist.

Die voranstehende Aufgabe wird gelöst durch eine Messvorrichtung mit den Merkmalen des unabhängigen Vorrichtungsanspruchs, einem Verfahren mit den Merkmalen des unabhängigen Verfahrensanspruchs und ein Computerprogrammprodukt mit den Merkmalen des unabhängigen Softwareanspruchs. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Vorrichtung beschrieben worden sind, selbstverständlich auch im Zusammenhang mit dem erfindungsgemäßen Verfahren und/oder dem erfindungsgemäßen Computerprogrammprodukt und jeweils umgekehrt, sodass bezüglich der Offenbarung zu den einzelnen Erfindungsaspekten stets wechselseitig Bezug genommen wird bzw. werden kann.

Durch die in den abhängigen Ansprüchen aufgeführten Maßnahmen und technischen Merkmalen sind vorteilhafte Weiterbildungen und Verbesserungen der in den unabhängigen Ansprüchen angegebenen Erfindungsgegenstände möglich.

Erfindungsgemäß weist die Messvorrichtung zur (insbesondere zerstörungsfreien und/oder zerstörungsarmen) Ermittlung von mechanischen Eigenschaften einer Werkstückprobe, welche ggf. in einer Werkstückaufnahme der Messvorrichtung zur Prüfung fixierbar ist, zumindest eine Bilderfassungseinheit zur optischen Ermittlung einer Werkstückgeometrie der Werkstückprobe auf. Darüber hinaus ist bei der erfindungsgemäßen Messvorrichtung zumindest ein mechanischer Prüfkopf zur Erzeugung eines insbesondere mechanischen Eindrucks in der Werkstückprobe vorgesehen. Ferner bilden zumindest die Bilderfassungseinheit und der mechanische Prüfkopf zusammen eine Baueinheit.

Der Begriff "Werkstückprobe" umfasst sämtliche zu untersuchenden Proben, insbesondere Materialproben und Werkstoffproben, die u.a. auf ihre Werkstoffeigenschaften hin untersucht werden. Hierbei geht es vorzugsweise um die mechanischen Eigenschaften der Werkstückprobe, da diese ggf. als Halbfabrikat weiterverarbeitet werden soll. Unter dem Begriff "mechanischen Eindruck" wird eine erzeugte Vertiefung, vorzugsweise in der Oberfläche der Werkstückprobe, verstanden, die durch den mechanischen Prüfkopf in der Werkstückprobe erzeugt wird, vergleichbar zu einer Körnung, die von einem Körner erzeugt wird. Dabei können die Werkstückproben Material aufweisen, welches über anisotrope Eigenschaften verfügt und somit nachfolgend auch als "anisotropes Material" und/oder "anisotrope Werkstückprobe" bezeichnet wird.

Durch die bauliche Zusammenfassung der Bilderfassungseinheit und dem mechanischen Prüfkopf zu einer Baueinheit ergibt sich der Vorteil, dass sich eine vollautomatische Messung an der Werkstückprobe realisieren lässt, vorzugsweise ohne eine Bewegung der Werkstückprobe selbst und/oder Messvorrichtung. Diese automatische Messung bedarf insbesondere keinen manuellen Eingriff durch das Bedienpersonal während der Durchführung des entsprechenden Mess- und Prüfungsverfahrens. Vorzugsweise kann zur Durchführung des Verfahrens diese Messvorrichtung (vorteilhafterweise einmalig) auch an die Werkstückprobe herangeführt werden, so dass nicht die Werkstückprobe zur Messvorrichtung bewegt wird, sondern umgekehrt, die entsprechende Messvorrichtung an die Werkstückprobe bewegt wird. Gerade bei gewalzten, stranggepressten, gegossenen und/oder gezogenen Werkstückproben, insbesondere welche im kontinuierlichen Herstellungsprozess hergestellt wird, z.B. durch Walzen, Ziehen oder dergleichen, ist die zuvor beschriebene Zuführung der Messvorrichtung an die (insbesondere kontinuierlichen) Werkstückprobe von großem Vorteil. Auch ist somit eine bauliche Trennung zwischen der Messvorrichtung und der ebenfalls notwendigen Werkstückaufnahme denkbar, wodurch sich die Einsatzmöglichkeiten der erfindungsgemäßen Messvorrichtung erweitern lassen.

So ist es z. B. möglich, die erfindungsgemäße Messvorrichtung in den Fertigungs- und/oder Verarbeitungsprozess der Werkstückproben einzubinden, in dem die Messvorrichtung die jeweiligen bestimmten mechanischen Eigenschaften einer Werkstückprobe an eine beabstandete Elektronikeinheit (insbesondere ausgestaltet als Server und/oder Cloud) vorzugsweise per Funk und/oder Draht und/oder Netzwerk weiterleitet, wodurch eine Rückkopplung im Regelkreis des Fertigungs- und/oder Verarbeitungsprozess der Werkstückproben gebildet ist. Hierdurch kann zu einem sehr frühen Zeitpunkt eine Optimierung der Fertigung und/oder Verarbeitung der Werkstückproben erfolgen, so dass weniger Ausschuss produziert werden kann und die Qualität verbessert werden kann.

Unter einer Werkstückprobe im Sinne der Erfindung kann ein oder mehrere Bauteile, Oberflächenschichten und/oder Werkstoff-Proben verstanden werden. Die mechanischen Eigenschaften der Werkstückproben können dabei Verfestigungsverhalten, Schädigungsparameter, Bruchdehnung, Zug- und/oder Druckfestigkeit, Duktilität, Verformungsvermögen, Zähigkeit, Fließbeginn, Dehngrenzen, Parameter die das Kriechverhalten beschreiben, Parameter die die Materialermüdung beschreiben, Streckgrenze und/oder Verfestigungen der Werkstoffe sein. Auch können durch die Erfindung weitere Materialeigenschaften der Werkstückproben ermittelt werden, wie z. B. Walz- oder Streckrichtung. Ebenso lassen sich auch anisotrope Materialien durch Erfindung untersuchen bzw. deren Materialeigenschaften bestimmen.

Vorzugsweise ist auch eine Werkstückaufnahme zum Fixieren und Prüfen der Werkstückprobe vorgesehen, die insbesondere über einen Prüfrahmen der Baueinheit aus Bilderfassungseinheit und mechanischem Prüfkopf, mechanisch verbunden bzw. befestigt sein kann. Da der mechanische Prüfkopf eine Prüfkraft auf die Werkstückprobe ausübt, ist es von Vorteil, dass die Werkstückprobe unnachgiebig, insbesondere in der Werkstückaufnahme, fixiert ist. Sofern die Werkstückprobe in der Werkstückaufnahme nachgiebig fixiert ist, erhöht sich der notwendige Korrekturaufwand bei dem Verfahren, um zu genauen Messergebnissen zu gelangen.

Dabei kann durch die erfindungsgemäße Messvorrichtung eine insbesondere zerstörungsfreie und/oder zerstörungsarme Werkstück-/Werkstoff-Prüfung (insbesondere vollautomatisch, d. h. ohne manuellen Eingriff) durchgeführt werden, die insbesondere zur Ermittlung von lokalen Werkstoffeigenschaften führen kann. Im Gegensatz zu herkömmlichen Zug- und Härteprüfungen wird bei der erfindungsgemäßen Messung zur Ermittlung von mechanischen Eigenschaften einer Werkstückprobe, ein mechanischer Eindruck, der jedoch zerstörungsarm oder zerstörungsfrei für die Werkstückprobe ist, in die Werkstückprobe durchgeführt, wodurch lokale Werkstoffeigenschaften/Parameter, vorzugsweise durch einen Vergleich einer (insbesondere ausschließlich optisch) gemessenen Eindrucktopographie mit einer computerbasierten Simulation einer theoretischen Eindrucktopographie unter Verwendung eines Materialmodells, eines Optimierungsalgorithmus und/oder ein Verfahren der künstliche Intelligenz, maschinelles Lernen, etc., ermittelbar sind.

Dafür kann die Werkstückprobe in der Werkstückaufnahme, vorzugsweise über ein Spannfutter, insbesondere Schnellspannfutter, oder einer Fixiereinheit der Messvorrichtung fixiert werden und diese von einer Bilderfassungseinheit derart optisch erfasst werden, dass von der Bilderfassungseinheit die Werkstückgeometrie der Werkstückprobe ermittelbar ist. Die Werkstückaufnahme kann auch ohne eine Einspannung der Werkstückprobe erfolgen, je nachdem, wie diese in ihrer Form, z. B bei planparallele Proben, ausgestaltet ist und wo der Eindruck erfolgen soll. Allerdings sollte die Werkstückaufnahme einen unnachgiebigen Untergrund für die Werkstückprobe bilden, um der Prüfkraft des mechanischen Prüfkopfes entgegenzuwirken. Unter der Werkstückgeometrie kann dabei im Sinne der Erfindung insbesondere die Oberflächengeometrie und/oder die geometrischen Abmessungen verstanden werden. Dabei ist es erfindungsgemäß denkbar, dass die Bilderfassungseinheit die Werkstückprobe eindimensional in Verbindung mit einer Rasterung, zweidimensional und/oder dreidimensional optisch erfasst. Der zumindest eine mechanische Prüfkopf der Messvorrichtung kann (nach der optischen Erfassung) einen mechanischen Eindruck in die Werkstückprobe durch ein Eindruckverfahren mit einer Prüfkraft einbringen. Idealerweise findet nach jedem erstellten mechanischen Eindruck auch eine optische und/oder taktile Erfassung der jeweiligen Eindrucktopographie statt, um somit die Genauigkeit des gesamten Verfahrens zu verbessern.

Der Prüfkopf, die Werkstückaufnahme und/oder die Bilderfassungseinheit können hierbei beweglich zueinander ausgebildet sein, wobei erfindungsgemäß zumindest eine Antriebseinheit zur zumindest tlw. Positionierung der Werkstückaufnahme, der Bilderfassungseinheit und/oder den Prüfkopf zueinander vorgesehen ist. Hierdurch kann auf ein Umspannen oder eine erneute Fixierung der Werkstückprobe bei einer Messung verzichtet werden. Die Antriebseinheit kann dabei erfindungsgemäß mechanisch, elektrisch, elektromechanisch, hydraulisch und/oder pneumatisch angetrieben sein. Dabei kann die Antriebseinheit auch "passiv" als ein Totgewicht und/oder Federantrieb und/oder Kraft-/Energiespeicher ausgebildet sein, sodass kein aktiver Antrieb für die Relativbewegung von Prüfkopf zur Werkstückprobe notwendig ist.

Es ist ferner denkbar, dass lediglich eines der drei Bauteile: Werkstückaufnahme, Bilderfassungseinheit und Prüfkopf oder sämtliche Bauteile zueinander beweglich ausgebildet sind. Vorzugsweise ist bei der erfindungsgemäßen Baueinheit der mechanische Prüfkopf bewegbar zur Bilderfassungseinheit ausgestaltet. Auch ist es denkbar, dass mehr als eine Antriebseinheit vorgesehen ist. Die Baueinheit kann dabei zumindest eine Antriebseinheit für die Verstellung bzw. Bewegung des mechanischen Prüfkopfs und/oder der Bilderfassungseinheit vorgesehen. Auch kann eine Antriebseinheit zumindest ein Bauteil, Werkstückaufnahme, Bilderfassungseinheit und/oder Prüfkopf, positionieren oder die eine Antriebseinheit mehr als ein Bauteil oder sämtliche Bauteile, der Werkstückaufnahme, Bilderfassungseinheit und/oder den Prüfkopf antreiben und somit zumindest tlw. positionieren. Vorzugsweise dient die zumindest eine Antriebseinheit zumindest zur tlw. Positionierung der Werkstückaufnahme mit einer darin fixierten Werkstückprobe und dem zumindest einen Prüfkopf zueinander, sodass ein Eindruck, insbesondere mechanischer Eindruck, in der Werkstückprobe erzeugt werden kann. Dieser Vorgang kann auch als Härteprüfung oder Indentationsvorgang, insbesondere Nanoindentationsvorgang, bezeichnet werden. Im Rahmen der Erfindung kann die Werkstückprobe insbesondere ein isotropes und/oder anisotropes Material, insbesondere Sintermaterialien und/oder gehärtete Materialien, aufweisen.

Darüber hinaus ist es denkbar, dass der Prüfkopf, die Werkstückaufnahme und/oder die Bilderfassungseinheit auswechselbar an der Messvorrichtung angeordnet sind. Die erfindungsgemäße Messvorrichtung ermöglicht somit eine (insbesondere vollständige) automatisierbare Werkstoffprüfung, welche insbesondere in vorhandene Produktionssysteme und/oder -prozesse integriert werden kann.

Da die Antriebseinheit aus einem Zylinder, Motor, oder dergleichen bestehen kann, ist es zweckmäßig, dass zwischen der Antriebseinheit und dem zu bewegenden Bauteil (gemeint ist zumindest die Bilderfassungseinheit, der mechanische Prüfkopf und/oder die Werkstückaufnahme) ein Verstellelement vorgesehen ist. Dieses Verstellelement kann ein Gestänge, ein Getriebe, ein Leitungssystem, Draht oder Seil umfassen. Vorzugsweise werden spielfreie Verstellelemente eingesetzt, um die Präzision der erfindungsgemäßen Messvorrichtung zu erhöhen.

Auch ist es denkbar, dass die gesamte Baueinheit durch die Antriebseinheit und das erwähnte Verstellelement bewegbar ist. Ferner ist es möglich, dass mehrere Antriebseinheiten und mehrere Verstellelemente vorgesehen sind, um eine variable Verstellbarkeit der einzelnen Bauteile zueinander zu ermöglichen. Hierdurch lassen sich die Einsatzmöglichkeiten der erfindungsgemäßen Messvorrichtung deutlich erhöhen.

Um eine möglichst stabile Messvorrichtung zu erhalten, ist es von Vorteil, den Freiheitsgrad zur Verstellbarkeit der Bilderfassungseinheit und/oder des mechanischen Prüfkopfs insbesondere zueinander, so gering wie möglich zu halten. Hierzu kann bei der Baueinheit zumindest eine Umlenkeinheit vorgesehen sein, wodurch ein Strahlengang der Bilderfassungseinheit ablenkbar ist. Durch diese Maßnahmen ist es sogar denkbar, dass die Bilderfassungseinheit starr zum mechanischen Prüfkopf in der Baueinheit angeordnet ist, wobei nur die Prüfspitze bewegbar ausgestaltet ist. Damit erübrigt sich bei einem Messverfahren die Verstellbarkeit zwischen dem mechanischen Prüfkopf und der Bilderfassungseinheit.

Vorzugsweise weist die Umlenkeinheit zum Ablenken des Strahlengangs wenigstens einen Spiegel, bevorzugt zumindest zwei Spiegel, auf. Auch ist es denkbar, dass zumindest ein Spiegel relativ zur Baueinheit bewegbar ist. Vorzugsweise kann ein erster Spiegel dabei feststehend ausgestaltet sein und ein zweiter Spiegel ist bewegbar ausgestaltet, wodurch der Strahlengang insgesamt zweimal umlenkbar ist, um eine optische Ermittlung einer Werkstoffgeometrie für die Bilderfassungseinheit zu ermöglichen.

Des Weiteren ermöglicht die erfindungsgemäße Messvorrichtung eine im Wesentlichen zerstörungsfreie Werkstoffprüfung, wobei der Eingriff eines Bedieners für die Ermittlung von mechanischen Eigenschaften der Werkstückprobe zumindest reduziert oder auch vollständig vermieden werden kann, wobei gleichzeitig die Geschwindigkeit zur Durchführung des Verfahrens bzw. der Prüfung durch die Automatisierung um ein Vielfaches erhöht werden kann. Hierdurch lassen sich die erhaltenen Ergebnisse zu den mechanischen Eigenschaften der Werkstückprobe deutlich verbessern, da persönliche Bedienungsfehler zumindest teilweise oder auch vollständig vermieden werden können. Auch die Reproduzierbarkeit des Messverfahrens kann somit deutlich verbessert werden. Die optische Ermittlung der Werkstückgeometrie, der mechanische Eindruck in die Werkstückprobe sowie die optische Erfassung des mechanischen Eindrucks kann durch die zumindest tlw. oder vollständige Positionierung der Bauteile zueinander (automatisch) ermöglicht werden. Somit kann ein automatisches Prüfen einer oder mehrerer Werkstückproben durch die erfindungsgemäße Vorrichtung, vorzugsweise vollautomatisch, durchgeführt werden. Hierdurch kann das Messverfahren besonders zügig und exakt, insbesondere in einem online Fertigungs- und/oder Verarbeitungsverfahren der Werkstückprobe, durchgeführt werden, so dass die Reproduzierbarkeit der Messergebnisse hervorragend ist.

Im Rahmen der Erfindung kann zumindest die Bilderfassungseinheit, der Prüfkopf, die Antriebseinheit und die Werkstückaufnahme an einem Prüfrahmen angeordnet sein, wobei insbesondere ein beweglicher Prüftisch vorgesehen sein kann, an dem die Werkstückaufnahme anordbar ist. Durch einen gemeinsamen Prüfrahmen, an welchem zumindest die Bilderfassungseinheit, der Prüfkopf, die Antriebseinheit und die Werkstückaufnahme angeordnet sein können, kann ein kompakter Aufbau der Messvorrichtung erzielt werden. An dem Prüfrahmen sind die Werkstückaufnahme, die Bilderfassungseinheit und/oder der Prüfkopf zumindest tlw. zueinander positionierbar, sodass insbesondere eine Relativbewegung zwischen der Werkstückaufnahme, der Bilderfassungseinheit und/oder dem Prüfkopf durchführbar ist. Die Positionierung bzw. eine Relativbewegung zueinander kann dabei horizontal (in y-Richtung) und/oder vertikal (in x-Richtung) und/oder rotatorisch ausgebildet sein, wobei insbesondere ein beweglicher Prüftisch vorgesehen ist, an dem die Werkstückaufnahme anordbar und welche derart ausgestaltet ist, dass eine zumindest tlw. Positionierung zueinander durchführbar ist. Der Prüftisch kann dabei derart ausgestaltet sein, dass zumindest eine Werkstückprobe oder eine Mehrzahl an Werkstückproben bzw. Werkstücken an der Werkstückaufnahme des beweglichen Prüftisches anordbar ist und der Prüftisch horizontal, vertikal und/oder rotatorisch verfahren werden kann. Der Prüfrahmen kann erfindungsgemäß eine U-Form aufweisen, wobei an dem einen Schenkel der Prüftisch und/oder die Werkstückaufnahme und dem weiteren Schenkel die Bilderfassungseinheit und/oder der Prüfkopf angeordnet sein kann. Die zumindest eine Antriebseinheit kann ebenfalls an einem der Schenkel I des Prüfrahmens angeordnet sein. Somit entsteht ein kompakter Aufbau der Messvorrichtung durch den Prüfrahmen.

Es ist des Weiteren denkbar, dass der Prüfkopf eine Prüfspitze aufweist, wobei die Prüfspitze zumindest ein Mineral oder Hartmetall aufweist. Auch sind weitere Materialien für die Prüfspitze je nach Werkstückprobe denkbar. Die Prüfspitze selber kann, vorzugsweise über ein Spannfutter, insbesondere Schnellspannfutter, austauschbar sein. Insbesondere kann die Prüfspitze eine definierte Prüfspitzengeometrie aufweisen. Bei einem Mineral kann es sich erfindungsgemäß um einen Diamanten oder einen Rubin handeln. Ein Hartmetall kann in Form eines gesinterten Carbidhartmetalls ausgebildet sein, wodurch eine hohe Härte und Verschleißfestigkeit erzielbar ist. Vorzugsweise kann das Hartmetall zumindest Wolframcarbid und/oder Kobalt aufweisen. Darüber hinaus ist es denkbar, dass die Prüfspitze Titankarbide, Tantalkarbide, Chromkarbide und/oder Varnadiumkarbide, insbesondere in einem Metallwerkstoff, aufweist. Die dadurch erreichbare hohe Härte und Verschleißfestigkeit kann somit über einen langen Zeitraum vergleichbare, insbesondere gleichbleibende mechanische Eindrücke in einer Werkstückprobe ermöglichen. Darüber hinaus ist der Verschleiß solcher Hartmetalle und Minerale gering. Die Prüfspitzengeometrie kann dabei sphärisch, konisch, sphärokonisch oder kugelförmig ausgebildet sein. Vorzugsweise ist die Prüfspitze derart geometrisch ausgebildet, dass eine Materialaufweitung im Bereich des mechanischen Eindrucks in der Werkstückprobe erzielt werden kann. Besonders bevorzugt ist es, wenn die Prüfspitzengeometrie rotationssymmetrisch ausgebildet ist, sodass eine optische Erfassung des mechanischen Eindrucks in einer isotropen Werkstückprobe (mit isotropem Material) einen rotationssymmetrischen Verlauf aufweist. Dementsprechend kann eine Mittelung entlang des mechanischen Eindrucks bspw. in Gradwinkelschritten, vorzugsweise alle 1° bis 5° vorgenommen werden. Bei einer anisotropen Werkstückprobe ergibt sich i.d.R. keinen rotationssymmetrischen Verlauf, sondern beispielsweise ein kleeblattförmiger Verlauf.

Vorteilhafterweise kann ein Tiefenmesser (sowie ggf. ein Kraftmesser) u. a. für den Prüfkopf vorgesehen sein, wodurch zumindest eine Eindrucktiefe (auch Eindringtiefe genannt) des Prüfkopfes, insbesondere der Prüfspitze, in der Werkstückprobe messbar ist. Der Messvorgang wird vorzugsweise mit vordefinierten Prüfbedingungen, bspw. vordefinierter Kraft- und/oder Eindrucktiefe, durchgeführt. Durch die bekannte Prüfspitzengeometrie und den ermittelten Messdaten für Eindringkraft und Eindringweg, kann die Kontaktfläche und in weiterer Folge die zuvor genannten Werkstoffparameter/ Eigenschaften gemittelt werden. Bei einem erfindungsgemäßen Tiefenmesser kann es sich bspw. um einen Plattenkondensator, insbesondere Treibplattenkondensator handeln, welcher auf einem bspw. Rasterkraftmikroskop angebracht ist und bei Aufbringung einer Kraft zur Durchführung eines mechanischen Eindrucks in die Werkstückprobe eine Kapazitätsänderung im Plattenkondensator messbar ist. Hierdurch kann zum einen die erforderliche Kraft und die entsprechende Eindringtiefe gemessen werden, wodurch auch die Werkstückparameter/ Eigenschaften geschlossen werden kann.

Die Eindrucktiefe bzw. Eindringtiefe des Prüfkopfes, insbesondere der Prüfspitze, kann erfindungsgemäß zwischen ungefähr 1 µm und ungefähr 3.000 µm, vorzugsweise zwischen ungefähr 10 µm und ungefähr 500 µm, besonders bevorzugt zwischen ungefähr 50 µm und ungefähr 250 µm, betragen. Die geringe Eindrucktiefe ermöglicht eine im Wesentlichen zerstörungsfreie Werkstoffprüfung der Werkstückprobe und gleichzeitig können Metalle, Legierungen sowie gewisse Kunststoffe durch die Messvorrichtungen vermessen werden. Demensprechend bleiben die Werkstückproben bzw. Bauteile bei dem Messverfahren erfindungsgemäßen nahezu unversehrt gegenüber bspw. bekannten Zugprüfungen, die üblicher Weise eine Zerstörung der Probe bewirken.

Im Rahmen der Erfindung kann eine Lichtquelle vorgesehen sein, wobei insbesondere die Lichtquelle in der Bilderfassungseinheit integriert sein kann. Die Lichtquelle dient erfindungsgemäß zur (optimalen) Beleuchtung der Werkstückproben bzw. des mechanischen Eindrucks in der Werkstückprobe. Somit kann die Lichtquelle in der Bilderfassungseinheit als Teil des optischen Sensors ausgestaltet sein und somit auch zum Messverfahren (z. B. wie Interferometer) gehören. Die Lichtquelle kann die Oberflächengeometrie der Werkstückprobe sowie die Eindruckgeometrie des mechanischen Eindrucks derart ausleuchten, dass über die Bilderfassungseinheit die Werkstückgeometrie und die Eindrucksgeometrie optisch erfasst werden können. Erfindungsgemäß kann die Lichtquelle derart regelbar sein, dass die Lichtstärke bspw. an die vorhandenen Lichtgegebenheiten angepasst werden kann, sodass Reflektionen im Wesentlichen verhindert werden können. Bei der Lichtquelle kann es sich bspw. um einen optischen Sensor mit zumindest einer (integrierter) Infrarot-, LED- und/oder OLED-Lichtquellen handeln. Vorzugsweise wird von der Lichtquelle zumindest ein Lichtpunkt oder ein linearer Lichtstreifen erzeugt, die (Lichtpunkt oder Lichtstreifen) ansteuerbar sind. Somit kann das Licht an die definierten Stellen des mechanischen Eindrucks der Werkstückprobe gesendet werden, wodurch eine optische Messung deutlich verbesserbar ist. Auch ist es denkbar, dass die vorhandene Lichtquelle die gesamte Werkstückprobe großflächig und insbesondere homogen ausleuchtet.

Die Bilderfassungseinheit kann als ein konfokales Mikroskop oder ein chromatischer Weißlichtsensor (bevorzugt ist ein Weißlichtinterferometer) ausgestaltet sein. Auch ist ein Stereoobjektiv denkbar um besonders optisch exakt die dreidimensionale Ausgestaltung des mechanischen Eindrucks der Werkstückprobe erfassen zu können. Zusätzlich oder optional können diverse Sensoren (z. B. zur Lasertriangulation, zum Laserscanning, oder für Konfokalmikroskop, Profilometer, Rasterkraftmikroskop, oder als Konfokalsensor, Fokusvariationssensor) insbesondere basierend auf Fokusvariation sowie Weißlichtsensoren (Punktsensor) zur Messdatenerfassung (mit oder ohne zusätzliche Lichtquelle) vorhanden sein. Die gemessenen Daten des mechanischen Eindrucks der Werkstückprobe werden als digitale (erzeugte) Eindrucktopographie in einer Steuereinheit und/oder einer Elektronikeinheit in einem Speicher z. B. als 3D Geometrie, bzw. Punktewolke, bzw. xyz-Tripel, bzw. Datenmatrix, abgelegt, um diese ggf. anschließend mit der computerbasierten Simulation einer theoretischen Eindrucktopographie unter Verwendung eines Materialmodells vergleichen zu können. Hierdurch lassen sich dann die mechanischen Eigenschaften der Werkstückprobe, wie z. B. Verfestigungsverhalten, Schädigungsparameter, Bruchdehnung, Zugfestigkeit, Duktilität, Verformungsvermögen, Zähigkeit, Fließbeginn, Dehngrenzen, Parameter die das Kriechverhalten beschreiben, Parameter die die Materialermüdung beschreiben, Streckgrenze und/oder Verfestigungen der Werkstoffe, (insbesondere indirekt) bestimmen.

Es ist im Rahmen der Erfindung ferner denkbar, dass ein beweglicher Werkzeugrevolver vorgesehen ist, an dem zumindest der Prüfkopf und die Bilderfassungseinheit anordbar sind. Der Werkzeugrevolver kann dabei rotatorisch und/oder translatorisch beweglich, insbesondere an einem Schenkel des Prüfrahmens, angeordnet sein. Dementsprechend kann der Prüfkopf und/oder die Bilderfassungseinheit rotatorisch und/oder translatorisch über den Werkzeugrevolver positioniert werden. Darüber hinaus ist es denkbar, dass der Werkzeugrevolver zumindest eine Blende mit einer Öffnung für den Prüfkopf und/oder die Bilderfassungseinheit aufweist. Es ist des Weiteren denkbar, dass an dem Werkzeugrevolver zumindest eine erfindungsgemäße Lichtquelle anordbar ist. Der Werkzeugrevolver ermöglicht eine kompakte Bauform der Messvorrichtung, wobei durch eine Bewegung des Werkzeugrevolvers, insbesondere eine rotatorische Bewegung des Werkzeugrevolvers, ein Wechsel zwischen den Bauteilen, zumindest zwischen dem Prüfkopf und der Bilderfassungseinheit während eines Messvorgangs ermöglicht ist. Somit ergibt sich ein automatisierbares Prüfverfahren auf einem kompakten Bauraum, wodurch die Messvorrichtung einfacher in Produktionssysteme und/oder Produktionsprozesse integriert werden kann. Dementsprechend ist es denkbar, dass an zumindest einer Öffnung und/oder einer Blende des Werkzeugrevolvers ein Prüfkopf mit einer insbesondere Prüfspitze angeordnet ist und an einer weiteren Öffnung die Bilderfassungseinheit angeordnet ist. Darüber hinaus kann vorgesehen sein, dass an einer weiteren Blende eine erfindungsgemäße Lichtquelle anordbar ist, wobei über die Blende die Bilderfassungseinheit, der Prüfkopf und/oder die Lichtquelle freigebbar und/oder verschließbar ist.

Ferner ist es im Rahmen der Erfindung denkbar, dass die Messvorrichtung an einem Tragarm, insbesondere einem Roboterarm, anordbar und/oder bewegbar ist. Somit kann die Messvorrichtung -wie bereits zuvor erwähnt- an die Werkstückprobe herangeführt werden, um dort das Messverfahren durchzuführen. Zweckmäßigerweise kann bei dieser Messvorrichtung die Baueinheit über den Prüfrahmen mit der Werkstückaufnahme verbunden sein. Ein fester Untergrund kann auch als Werkstückaufnahme dienen, auf der die Werkstückprobe, insbesondere spielfrei, zu liegen kommen kann. Auch ist es denkbar, dass die Baueinheit separat und damit baulich getrennt von der Werkstückaufnahme ausgestaltet ist. Zweckmäßigerweise kann zumindest eine Fixiereinheit vorgesehen sein, um die Messvorrichtung, vorzugsweise bei einem Messvorgang, sicher an der Werkstückprobe zu befestigen. Hierdurch soll die Stabilität gerade einer an einem Tragrahmen angeordneten Messvorrichtung erhöht werden.

Die erfindungsgemäße Messvorrichtung ist geeignet, um Werkstückproben aus Metall zu überprüfen und zu messen. Hierbei kann die Werkstückprobe, vorzugsweise Aluminium, Magnesium, Blei, Eisen, Edelstahl, Gold, Molybdän, Nickel, Kupfer, Silber, Vanadium, Wolfram, Zink, Zinn, Titan und/oder eine Legierung, wie beispielsweise Messing, enthalten. Gerade bei Werkstückproben, die Magnesium aufweisen, womit ein Magnesium-Anteil von > 10% zum Gesamtmaterial gemeint ist, ist von besonderem wirtschaftlichen Vorteil, wenn im Herstellungsprozess bereits die mechanischen Eigenschaften zerstörungsfrei ermittelbar sind. Außerdem kann im Rahmen der Qualitätssicherung so von jedem hergestelltem und weiter verarbeitetem Werkstück die ermittelten mechanischen Eigenschaften bestimmt und protokolliert werden. Hierdurch lässt sich eine lückenlose Qualitätssicherung erzielen.

Gerade bei Werkstückproben, die gewalzt, stranggepresst, gegossen oder gezogen werden, können diese mechanisch Eigenschaften während des Herstellungsprozesses durch die Erfindung bestimmt werden. Hierbei können insbesondere richtungsabhängige (mechanische) Eigenschaften des Materials ermittelt werden, wie z.B. bei anisotropen Werkstückproben.

Es ist erfindungsgemäß möglich, dass zumindest eine Steuereinheit zur Steuerung und/oder Regelung und/oder Auswertung von Daten der Bilderfassungseinheit und der Antriebseinheit vorgesehen ist, insbesondere dass die Messvorrichtung zumindest eine Schnittstelle zur Übertragung von Daten der Bilderfassungseinheit und der Antriebseinheit an eine beabstandete Elektronikeinheit aufweist. Die erfindungsgemäße Steuereinheit dient zur Steuerung und/oder Regelung und/oder Auswertung von Daten der Messvorrichtung, wobei insbesondere über die Steuereinheit Parameter für die Ermittlung der Werkstoffeigenschaften bzw. Werkstoffparameter einstellbar sind. Dementsprechend kann über die Steuereinheit zumindest die Eindringtiefe, die Eindringkraft und/oder die Anzahl der durchzuführenden mechanischen Eindrücke in die Werkstückprobe gesteuert und/oder geregelt werden. Darüber hinaus kann über die Steuereinheit Daten der Messung bspw. der Bilderfassungseinheit, der Antriebseinheit, insbesondere des Prüfkopfes, der Prüfspitze und/oder des Tiefen-/ und/oder Kraftmessers erzielt werden. Hierzu kann die Steuereinheit über einen Speicher zur Datenspeicherung verfügen. Ebenfalls kann die Steuereinheit über zumindest eine Recheneinheit (Mikroprozessor) verfügen, um die computerbasierte Simulation einer theoretischen Eindrucktopographie unter Verwendung eines Materialmodells berechnen zu können und ggf. mit der erzeugten Eindrucktopographie (aus dem Speicher) vergleichen oder diese aus einer Datenbank beziehen oder diese durch ein neuronales Netz abzubilden zu können.

Es ist des Weiteren denkbar, dass die Messvorrichtung zumindest eine (kabelgebundene oder drahtlose) Schnittstelle zur Übertragung von Daten der Bilderfassungseinheit und der Antriebseinheit an eine beabstandete Elektronikeinheit, insbesondere einen Server, eine Cloud, einen Computer, ein Tablet, ein Smartphone und/oder eine Smartwatch aufweist. Die Schnittstelle kann dabei als ein Stecker-, Kabel- und/oder Wireless-Übertragungsverfahren ausgebildet sein. Dementsprechend ist eine Schnittstelle an der Messvorrichtung, insbesondere an dem Prüfrahmen der Messvorrichtung, anordbar, sodass eine Übertragung, insbesondere das Empfangen und/oder Senden der Daten zwischen der Messvorrichtung und einer beabstandeten Elektronikeinheit durchführbar ist. Im Rahmen der Erfindung ist es denkbar, dass die Schnittstelle, insbesondere Datenschnittstelle als Bluetooth, NFC, Wireless-Lan und/oder GSM-Schnittstelle ausgebildet ist. Die Übertragung von Daten der Bilderfassungseinheit, der Antriebseinheit, des Prüfkopfes, insbesondere des Tiefenmessers, kann dabei bidirektional ausgebildet sein, sodass sowohl Daten empfangen als auch gesendet werden können. Die Datenübertragung kann auch verschlüsselt stattfinden, um Störungen und Manipulationen auszuschließen. Gemäß der zuvor erwähnten Optionen ist es denkbar, dass von einer beabstandeten Elektronikeinheit Daten, insbesondere Daten für definierte Prüfbedingungen, bspw. Prüfkraft und/oder Eindringtiefe übermittelt werden können. Darüber hinaus können Daten der Bilderfassungseinheit bspw. die Werkstückgeometrie und insbesondere der Eindruckgeometrie bzw. Eindrucktopographie an die beabstandeten Elektronikeinheit übermittelt werden, um diese dort mit der computerbasierten Simulation einer theoretischen Eindrucktopographie unter Verwendung eines Materialmodells berechnen zu können und ggf. mit der erzeugten Eindrucktopographie vergleichen zu können oder diese aus einer Datenbank beziehen oder diese durch eine neuronales Netz abzubilden zu können. Durch den Einsatz einer beabstandeten Elektronikeinheit kann ein deutlicher Zeitgewinn bei der Durchführung des Verfahrens erzielt werden, was gerade bei online Messung von entscheidender Bedeutung ist, da ansonsten der Herstellprozess unterbrochen werden muss.

Gemäß einem weiteren Aspekt der Erfindung ist ein Verfahren zur Ermittlung von mechanischen Eigenschaften einer Werkstückprobe gemäß dem unabhängigen Verfahrensanspruch beansprucht. Das erfindungsgemäße Verfahren bringt die gleichen Vorteile mit sich, wie sie ausführlich mit Bezug auf die erfindungsgemäße Vorrichtung beschrieben worden sind. Das Verfahren weist zumindest einen der folgenden Schritte oder alle der folgenden Schritte auf:
a) Optische und/oder taktile Erfassung einer Werkstückgeometrie der Werkstückprobe,
b) Erzeugen eines insbesondere mechanischen Eindrucks durch Eindringen eines Prüfkopfes, insbesondere einer Prüfspitze in die Werkstückprobe mit definierten Prüfbedingungen,
c) optische und/oder taktile Erfassung einer Eindrucktopographie des erzeugten Eindrucks in der Werkstückprobe,
d) insbesondere computerbasierte Simulation einer theoretischen Eindrucktopographie (des Eindrucks) unter Verwendung eines Materialmodells, insbesondere eines elastoplastischen Modells, vorzugsweise für anisotrope Materialien,
e) Vergleich der simulierten und der mechanisch erzeugten Eindrucktopographie,
f) Ermittlung der mechanischen Eigenschaften der Werkstückprobe in Abhängigkeit der Schritte a) bis e).

Der Schritt a) erübrigt sich, wenn die Geometrie der Werkstückprobe aufgrund von vorherigen Informationen bereits bekannt ist und keinen Schwankungen unterliegt. Um die Genauigkeit des Verfahrens zu verbessern, empfiehlt es sich, Schritt a) ebenfalls durchzuführen. Auch können zumindest die Schritte a) bis c) automatisch ablaufen, vorzugsweise laufen alle Schritte a) bis f) automatisch ab, wodurch sich persönliche Bedienfehler vermeiden lassen. Insbesondere können die Verfahrensschritte zumindest tlw. (oder auch vollständig) gleichzeitig oder hintereinander ablaufen. Vorzugsweise finden die Schritte d) und e) wiederholend und/oder iterativ statt, bis beim Vergleich in Schritt e) kaum noch Unterschiede feststellbar sind. Anschließend kann dann Schritt f) erfolgen, der somit besonders exakte Daten (für die mechanischen Eigenschaften der Werkstückprobe) ermittelt. Auch kann Schritt f) jedes Mal nach Schritt e) erfolgen.

Somit können Schritt d), e) und f) eigentlich einen gemeinsamen (Vergleichs-)Schritt in dem iterativen Prozess bilden.
1. Es wird immer wieder simuliert (bzw. die simulierte Geometrie aus einer Datenbank genommen) und mit der echten Geometrie verglichen, wodurch ein Fehlerquadrat erhalten werden kann
2. Dieses Fehlerquadrat wird durch immer "passendere" Simulationen reduziert.
3) Ist das Fehlerquadrat sehr gering, kann das Verfahren abgebrochen werden.

Anschließend wird das Ergebnis aus Schritt f) ausgegeben.

Das erfindungsgemäße Verfahren kann dabei im Wesentlichen drei in seinen Eigenschaften unterschiedlich ausgeprägte Eindrücke (I. bis III.) aufweisen. Hierbei handelt es sich zumindest um einen mechanisch erzeugten Eindruck (I.) gemäß dem Verfahrensschritt b), welcher durch ein Eindringen eines Prüfkopfes, insbesondere einer Prüfspitze, in die Werkstückprobe mit definierten Prüfbedingungen erzeugt werden kann. Des Weiteren kann ein Eindruck (II.) dadurch definiert werden, dass der mechanisch erzeugte Eindruck optisch und/oder taktil erfasst, insbesondere durch eine Bilderfassungseinheit erfasst werden kann. Hierbei wird durch die optische und/oder taktile Erfassung eine Eindrucktopographie des mechanisch erzeugten Eindrucks in der Werkstückprobe durchgeführt. Ein weiterer dritter Eindruck (III.) ist ein simulierter Eindruck gemäß Verfahrensschritt d), wobei eine insbesondere computerbasierte Simulation einer theoretischen Eindrucktopographie des mechanisch erzeugbaren Eindrucks in der Werkstückprobe durchführbar ist. Dabei kann die simulierte theoretische Eindrucktopographie unter Verwendung eines (oder mehrerer) (theoretischen) Materialmodells, eines elastoplastischen Modells, vorzugsweise für anisotrope Materialien, durchgeführt werden, wobei das Materialmodell insbesondere auf Basis der definierten Prüfbedingungsdaten und unter Verwendung eines Algorithmus und/oder einer Heuristik ermittelt werden kann. Das Materialmodell kann dabei elastoplastisch, elastoviskoplastisch oder plastisch basiert sein. Im Schritt e) wird dementsprechend der simulierte, insbesondere computerbasierte und somit theoretische Eindruck bzw. die Eindrucktopographie und der mechanisch durchgeführte und von einer insbesondere Bilderfassungseinheit durch optisch und/oder taktile Erfassung ermittelten Eindrucktopographie verglichen. Auf Basis der zumindest drei Eindruckmodelle, dem mechanisch erzeugten Eindruck durch den Prüfkopf, insbesondere die Prüfspitze, den optisch und/oder taktil erfassten und mechanisch erzeugten Eindruck und dem simulierten Eindruck, insbesondere der erzeugten und erfassten sowie simulierten Eindrucktopographie, kann in Schritt f) eine Ermittlung der mechanischen Eigenschaften der Werkstückprobe durchgeführt werden. Bei der optischen und/oder taktilen Erfassung einer Eindrucktopographie des erzeugten Eindrucks in der Werkstückprobe wird vorzugsweise ein 3D-Höhenbild des mechanisch erzeugten Eindrucks in der Werkstückprobe ermittelt. Bei der computerbasierten Simulation einer theoretischen Eindrucktopographie wird ebenfalls ein 3D-Höhenbild des theoretischen Eindrucks simuliert. Daraufhin werden die beiden 3D-Höhenbilder miteinander verglichen, wodurch auf die mechanischen Eigenschaften, insbesondere Verfestigungsverhalten, Schädigungsparameter, Bruchdehnung, Zugfestigkeit, Duktilität, Verformungsvermögen, Zähigkeit, Fließbeginn, Dehngrenzen, Parameter die das Kriechverhalten beschreiben, Parameter die die Materialermüdung beschreiben o.ä. Parameter, geschlossen werden kann. Bei der Erzeugung des mechanischen Eindrucks und somit der Erzeugung einer Eindrucktopographie in der Werkstückprobe wird vorzugsweise mit vordefinierten Prüfbedingungen/Parameter bspw. eine Prüfkraft und/oder Prüftiefe ein Eindruck in der Werkstückprobe erzeugt.

Bei isotropen Materialien einer "isotropen" Werkstückprobe kann ein vereinfachtes Materialmodell zum Einsatz kommen, da in der Regel eine rotationssymmetrische Eindrucktopographie durch den erzeugten Eindruck bei der Werkstückprobe vorliegt. Im Gegensatz dazu müssen für alle anisotropen Materialien veränderte Materialmodelle in die Computersimulation einfließen, vorzugsweise verwendet man hierzu ein elastoplastisches Materialmodell, welches über weitere Modellparameter verfügt, damit auch richtungsabhängige Eigenschaften der Werkstückprobe ermittelbar sind.

Idealerweise findet im Schritt d) zumindest eine FEM-Simulation (Finite Elemente-Simulation) einer theoretischen Eindrucktopographie unter Verwendung des Materialmodells statt. Durch den Einsatz der FEM-Simulation können besonders exakt die mechanischen Eigenschaften der Werkstückprobe anhand der Simulation ermittelt werden. Außerdem wurden für die FEM-Simulation optimierte mathematische Verfahren entwickelt, um die computerbasierte Simulation in möglichst kurzen zeitlichen Schritten ablaufen zu lassen.

Vorzugsweise ist es vorgesehen, dass in einem Schritt c2) die erfasste Werkstoffgeometrie der Werkstückprobe aus Schritt a) bei der tatsächlichen Erfassung der Eindrucktopographie des erzeugten Eindrucks in der Werkstückprobe berücksichtigt wird. Durch diesen zusätzlichen Schritt c2) kann die Genauigkeit des vorliegenden Messverfahrens erhöht werden, da gerade bei kontinuierlichen Werkstückproben über die Länge bzw. Breite unterschiedliche Oberflächenausgestaltungen vorliegen. Somit können auch die kontinuierlichen Werkstückproben gemessen werden. Hierdurch können insbesondere Krümmungen oder Durchbiegungen über die Länge oder die Breite der Werkstückprobe eliminiert werden, um das Messergebnis bzw. die zu ermittelnden mechanischen Eigenschaften exakt bestimmen zu können.

Des Weiteren ist es denkbar, dass im Schritt c) eine Erfassung einer insbesondere vollständigen Eindrucktopographie des erzeugten Eindrucks in der Werkstückprobe stattfindet. Hierunter ist zu verstehen, dass nicht nur Teile der Eindrucktopographie optisch und/oder taktil vermessen werden, sondern eben die gesamte Eindrucktopographie. Dieses ist insbesondere bei anisotropen Materialien von wesentlicher Bedeutung. Nach der vollständigen Erfassung kann eine geometrische Teilung der Eindrucktopographie des erzeugten Eindrucks in der Werkstückprobe, vorzugsweise durch Ermittlung von wenigstens einer oder mehreren Symmetrieachsen, erfolgen. Durch die geometrische Aufteilung der Eindrucktopographie in Teilstücke, kann eine Erhöhung der Genauigkeit des Verfahrens erzielt werden und andererseits kann auch die computerbasierte Simulation auf das entsprechende Teilstück reduziert werden, wodurch ein deutlicher Zeitgewinn im Ablauf des Verfahrens erzielt werden kann. Die erwähnten Teilstücke können vorzugsweise Winkelstücke mit Winkeln von 45°, 90° oder 180°, je nach Anordnung der Symmetrieachsen, aufweisen. Dabei ist es denkbar, dass durch Spiegeln oder Umklappen der Teilstücke anhand der Symmetrieachsen eine Mittelwertbildung und somit eine Verbesserung der Messgenauigkeit erreicht werden kann. Außerdem kann somit der Vergleich im Schritt e) auf das entsprechende Teilstück der Eindrucktopographie beschränkt werden.

Ebenfalls ist es im Rahmen der Erfindung denkbar, dass zu jedem Schritt d) ein Schritt c) durchgeführt wird und anschließend jeweils ein Schritt e) und/oder Schritt d) erfolgen kann. Hierbei können auch Eindrucktopographien an ein und derselben Stelle, die mit unterschiedlichen Prüfkräften bzw. Eindringtiefen durchgeführt worden sind, untersucht werden, um die Messgenauigkeit des Verfahrens zu verbessern.

Um das Verfahren zu beschleunigen, kann die im Schritt c) optisch und/oder taktil erfasste Eindrucktopographie mit vorgespeicherten Eindrucktopographien aus einer Datenbank verglichen werden, wobei die vorgespeicherte Eindrucktopographie mit den geringsten Unterschieden im Vergleich aus Schritt e) zur Ermittlung der mechanischen Eigenschaften der Werkstückprobe herangezogen werden kann. So kann es vorgesehen sein, dass im Schritt e) Daten von vorsimulierten Eindruckstopographien Verwendung finden. Vorzugsweise können diese Daten in einem Speicher und/oder einer Datenbank abgelegt sein, die insbesondere in der beabstandeten Elektronikeinheit vorgesehen sind.

Des Weiteren ist es denkbar, dass zumindest für Schritt d) und/oder e) Verfahren der künstlichen Intelligenz zum Einsatz kommen. Hierdurch kann einerseits ein Zeitgewinn bei dem erfindungsgemäßen Verfahren erzielt werden und andererseits auch die Genauigkeit des Verfahrens erhöht werden. Allerdings kann sich durch den Einsatz des Verfahrens der künstlichen Intelligenz der Aufwand im Vorfeld für das Anlernen der entsprechenden Steuereinheit deutlich erhöhen. Ferner ist es denkbar, dass lernende Verfahren, vorzugsweise deep-learning und/oder Neuronale Netze-Verfahren Verwendung finden. Vorteilhafterweise sind gerade diese lernenden Verfahren soweit entwickelt, dass sie auch bei schwierigen und komplexen Anwendungsverfahren zur Anwendung kommen können, wie sie gerade im vorliegenden Verfahren vorliegen.

Auch ist es möglich, dass in einem weiteren Schritt g) Korrektur zwischen der erfassten Eindrucktopographie und der simulierten Eindrucktopographie stattfindet, um Messfehler, die z.B. auf falschen Annahmen bei dem Materialmodell basieren, zu eliminieren. Außerdem kann hiermit die Genauigkeit des vorliegenden Messverfahrens verbessert werden.

Idealerweise findet eine Anwendung des Verfahrens auch bei anisotropen Werkstückproben statt. Dabei können insbesondere richtungsabhängige Eigenschaften der Werkstückprobe, wie beispielsweise der Fließgrenzen/Dehngrenzen, Zugfestigkeiten, Duktilitäten und/oder Bruchdehnungen in Abhängigkeit der jeweiligen Richtung ermittelt werden.

Somit kann das erfindungsgemäße Verfahren auch bei gewalzten, stranggepressten, gegossenen und/oder gezogenen Werkstückproben zum Einsatz kommen, wodurch richtungsabhängige Eigenschaften des Materials messbar sind.

Vorteilhafterweise kann in einem Schritt b.2) zumindest ein erneutes Eindringen des Prüfkopfes, insbesondere einer Prüfspitze in der Werkstückprobe durchgeführt werden. Vorzugsweise werden hierbei die gleichen vordefinierten Prüfbedingungen, insbesondere Prüfkraft und/oder Eindringtiefe verwendet. Darüber hinaus ist es denkbar, dass die Position bzw. der Ort des mechanischen Eindrucks in der Werkstückprobe bestimmbar bzw. auswählbar ist. Vorzugsweise kann an zumindest zwei, vorzugsweise drei unterschiedlichen Positionen des Werkstücks die Messung durchgeführt werden, um die ermittelten, mechanischen Eigenschaften der Werkstückprobe (d. h. durch Mittelwertbildung robuster und) genauer bestimmen zu können. Dementsprechend kann vollautomatisch und/oder durch einen Bediener die Position für ein erneutes Eindringen des Prüfkopfes, insbesondere der Prüfspitze in die Werkstückprobe bestimmt werden. Dabei ist es denkbar, dass ein erneutes Eindringen mehrfach an gleicher (Prüf-)Stelle und/oder voneinander unterschiedlichen Stellen/Positionen an der Werkstückprobe durchgeführt wird. Bei gleichbleibenden Prüfbedingungen, insbesondere Eindringtiefe und/oder Prüfkraft, können somit Veränderungen bei einem erneuten Eindringen des Prüfkopfes, insbesondere der Prüfspitze in die Werkstückprobe, ermittelt werden. Hierdurch können Unregelmäßigkeiten in dem Material sowie evtl. auftretende Verschiebungen des Prüfkopfes, insbesondere einer Prüfspitze, bei der Ermittlung der mechanischen Eigenschaften der Werkstückprobe berücksichtigt werden. Somit können homogenere Messergebnisse erzielt werden, wodurch ein besonders "robustes" Messverfahren erzielbar ist. Auch ist es denkbar, dass an unterschiedlichen Positionen an der Werkstückprobe unterschiedliche Materialeigenschaften vorliegen, sodass ein mehrfaches Eindringen des Prüfkopfes, insbesondere der Prüfspitze an unterschiedlichen Positionen der Werkstückprobe das Ergebnis der Ermittlung der mechanischen Eigenschaften verbessern kann. Insbesondere werden bei dem Messverfahren ein Materialaufwurf und die Eindruckgeometrie zu einer Eindrucktopographie zusammengefasst. Der somit experimentell gemessene Eindruck in die Werkstückprobe und das Simulationsmodell können zur Quantifizierung der Höhendifferenz des Materialaufwurfs und somit der Eindrucktopographie eingesetzt werden.

Ebenfalls ist es von besonderem Vorteil, wenn eine Messung des Messverfahrens pro Werkstückprobe (Zeitspanne für eine Messung) kleiner als 14 Sekunden, bevorzugt kleiner als 12 Sekunden und besonders bevorzugt kleiner als 8 Sekunden dauert. Dabei ist die Zeitspanne für eine Messung durch den Anfangsschritt: (i) Anordnen und Fixierung der Werkstückprobe in der Messvorrichtung, Durchführung der Messung und (ii) Abschließen der Ermittlung der mechanischen Eigenschaften der Werkstückprobe (bis diese vorliegen) definiert. Somit ist eine optimale Einbindung der Messvorrichtung in den Fertigungs- und Verarbeitungsprozess der Werkstückprobe realisierbar (ohne dass es zu zeitlichen Verzögerungen kommen kann). Insbesondere kann damit eine rechtzeitige Rückkopplung für den gesamten Fertigungs- und Verarbeitungsprozess der Werkstückprobe erfolgen.

Im Rahmen der Erfindung kann eine auf dem Prüfkopf wirkende Kraft (Prüfkraft) und/oder eine Verschiebung des Prüfkopfes während des Eindringens und/oder des Herausfahrens ermittelt werden, wodurch insbesondere ein Lasteindringverlauf ermittelbar ist. Der Lasteindringverlauf kann dabei zur Ermittlung einer Lasteindringkurve während der mechanischen Erzeugung eines Eindrucks in der Werkstückprobe eingesetzt werden. Der Lasteindringverlauf bzw. die Lasteindringkurve gibt weitere Aufschlüsse auf die mechanischen Eigenschaften der Werkstückprobe, wobei ein gemessener Lasteindringverlauf bzw. eine gemessene Lasteindringkurve mit einem simulierten Lasteindringverlauf bzw. einer simulierten Lasteindringkurve verglichen werden kann.

Vorteilhafterweise kann zusätzlich in Abhängigkeit des Lasteindringverlaufs und einer Prüfspitzengeometrie die Ermittlung der mechanischen Eigenschaften der Werkstückprobe durchgeführt werden. Die Prüfspitzengeometrie kann dabei vorzugsweise rotationssymmetrisch und/oder mit einem konischen, sphärischen und/oder sphärokonischen und/oder kugelförmigen Verlauf ausgebildet sein. In Abhängigkeit des Lasteindringverlaufs, insbesondere während des Eindringens und/oder des Herausfahrens des Prüfkopfes bzw. der Prüfspitze und einer Prüfspitzengeometrie kann eine insbesondere Mittelung der ermittelten Messdaten vorgenommen werden, sodass die Qualität der Prüfung verbessert wird. Es ist des Weiteren denkbar, dass das E-Modul des Materials der Werkstückprobe bei der Ermittlung der mechanischen Eigenschaften der Werkstückprobe und/oder bei der computerbasierten Simulation einer theoretischen Eindrucktopographie berücksichtigt wird. Damit kann eine Verbesserung bzw. Genauigkeit der Messergebnisse unter Verwendung zusätzlicher Parameter in Form des E-Moduls verbessert werden, sodass dem Algorithmus oder der Heuristik bei der Ermittlung der mechanischen Eigenschaften zumindest eine weitere Konstante bei der Berechnung zur Verfügung steht.

Vorteilhaft kann die Prüflast zwischen ungefähr 10 g und ungefähr 3.000 kg, bevorzugt zwischen ungefähr 1.000 g und ungefähr 1.000 kg, besonders bevorzugt zwischen ungefähr zwischen 10 kg und ungefähr 500 kg betragen. Weiterhin vorteilhaft kann die Eindrucktiefe zwischen ungefähr 1 µm und ungefähr 3.000 µm (oder nur 1.000 µm), vorzugsweise zwischen ungefähr 10 µm und ungefähr 500 µm, besonders bevorzugt zwischen ungefähr 50 µm und ungefähr 250 µm betragen.

Im Rahmen der Erfindung können die Messdaten und/oder die mechanischen Eigenschaften der Werkstückprobe in einer Datenbank gespeichert werden. Die Datenbank dient zur Nutzung weiterer Werkstoffprüfungen und kann dabei als Vergleich der bereits ermittelten Werkstoffparameter unter definierten Prüfbedingungen/Parameter herangezogen werden. Darüber hinaus können - unter Nutzung der Datenbank - Messergebnisse interpoliert werden, sodass eine verbesserte Messgenauigkeit erzielbar ist. Die somit ermittelten Messdaten, welche in einer Datenbank gespeichert werden, können zur Analyse und Optimierung vorhandener Produkte und Prozesse genutzt werden. Kleinste Abweichungen vom Qualitätsstandard können somit früh in einem Produktionssystem bzw. in Produktionsprozessen erkannt und somit schneller bei der Fertigung reagiert werden. Somit kann eine gleichbleibende Qualität der Prüfung zur Ermittlung der Werkstoffeigenschaften bereitgestellt werden.

Gemäß einem weiteren Aspekt der Erfindung wird ein Computerprogrammprodukt für eine Messvorrichtung zur Ermittlung von mechanischen Eigenschaften einer Werkstückprobe beansprucht. Insbesondere ist das erfindungsgemäße Computerprogrammprodukt für eine erfindungsgemäße Messvorrichtung gemäß dem unabhängigen Vorrichtungsanspruch ausgebildet. Das Computerprogrammprodukt weist dabei einen Algorithmus und/oder eine Heuristik auf, welche von einer Elektronikeinheit und/oder einer Steuereinheit abgearbeitet wird, wobei der Algorithmus und/oder die Heuristik ein erfindungsgemäßes Verfahren, gemäß dem unabhängigen Verfahrensanspruch implementiert. Dementsprechend ergeben sich für das erfindungsgemäße Computerprogrammprodukt die gleichen Vorteile, wie sie ausführlich mit Bezug auf die erfindungsgemäße Vorrichtung und das erfindungsgemäße Verfahren beschrieben worden sind.

Weitere, die Erfindung verbessernde Maßnahmen ergeben sich aus der nachfolgenden Beschreibung zu einigen Ausführungsbeispielen der Erfindung, welche in den Figuren schematisch dargestellt sind. Sämtliche aus den Ansprüchen, der Beschreibung oder der Zeichnungen hervorgehende Merkmale und/oder Vorteile, einschließlich konstruktiver Einzelheiten, räumliche Anordnungen und Verfahrensschritte, können sowohl für sich als auch in den verschiedensten Kombinationen erfindungswesentlich sein. Dabei ist zu beachten, dass die Figuren nur beschreibenden Charakter haben und nicht dazu gedacht sind, die Erfindung in irgendeiner Form einzuschränken.

In den nachfolgenden Figuren werden für die gleichen technischen Merkmale auch von unterschiedlichen Ausführungsbeispielen die identischen Bezugszeichen verwendet.

Die voranstehende Erläuterung der Ausführungsform beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen. Es zeigen:
- Fig. 1: zeigt eine erste Ausführungsform einer erfindungsgemäßen Messvorrichtung,
- Fig. 2: zeigt eine weitere Ausführungsform einer erfindungsgemäßen Messvorrichtung,
- Fig. 3: zeigt eine weitere Ausführungsform einer erfindungsgemäßen Messvorrichtung,
- Fig. 4: zeigt einen erfindungsgemäßen Prüfkopf sowie einen hiermit erzeugbaren mechanischen Eindruck in einer Werkstückprobe,
- Fig. 5: zeigt einen mechanisch erzeugten Eindruck in einer Werkstückprobe,
- Fig. 6: schematische Ansicht einer erfindungsgemäßen Messvorrichtung mit einer Umlenkvorrichtung für den Strahlengang der Bilderfassungseinheit,
- Fig. 7: schematische Ansicht einer erfindungsgemäßen Messvorrichtung mit einer diagonal angeordneten Bilderfassungseinheit zum mechanischen Prüfkopf,
- Fig. 8: schematische Ansicht einer vergleichbaren Messvorrichtung aus Figur 7 mit einer zusätzlichen Lichtquelle zur Bilderfassungseinheit,
- Fig. 9: schematische Darstellung einer erfindungsgemäßen Messvorrichtung mit einer verstellbaren Bilderfassungseinheit und einem verstellbaren mechanischen Prüfkopf,
- Fig. 10: schematische Darstellung einer erfindungsgemäßen Messvorrichtung mit einem mechanischen Prüfkopf und einem schwenkbaren Prüfarm für die Prüfspitze,
- Fig. 11: schematische Darstellung einer erfindungsgemäßen Messvorrichtung mit einer querliegenden Bilderfassungseinheit zum mechanischen Prüfkopf,
- Fig. 12: schematische Draufsicht auf eine tatsächliche Eindrucktopographie in einer Werkstückprobe mit anisotropen Materialeigenschaften,
- Fig. 13a: beispielhaftes, dreidimensionales Höhenbild der erfassten Eindrucktopographie, z. B. aus Figur 12 und
- Figur 13b: Umsetzung des dreidimensionalen Höhenbilds aus Figur 13a in ein zweidimensionales Höhenbild mit zusätzlichen Höheninformationen.

In den nachfolgenden Figuren werden für die gleichen technischen Merkmale auch von unterschiedlichen Ausführungsbeispielen die identischen Bezugszeichen verwendet.

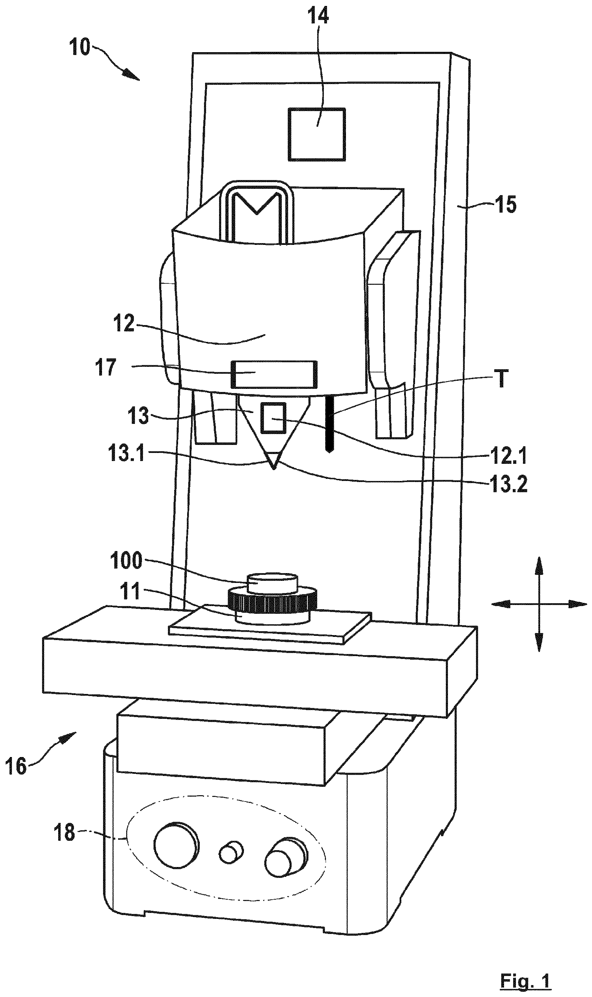

In der Figur 1 ist eine erfindungsgemäße Messvorrichtung 10 zur Ermittlung von mechanischen Eigenschaften einer Werkstückprobe 100 in einer ersten Ausführungsform gezeigt. Dabei ist die Werkstückprobe 100 in einer Werkstückaufnahme 11 der Messvorrichtung 10 zur Prüfung angeordnet. Darüber hinaus weist die Messvorrichtung 10 eine Bilderfassungseinheit 12 zur optischen Ermittlung einer Werkstückgeometrie der Werkstückprobe 100 auf. Optional oder ergänzend kann auch ein Tiefenmesser T zur taktilen Ermittlung einer Werkstückgeometrie der Werkstückprobe 100 vorgesehen sein. Die Bilderfassungseinheit 12 ist hierbei im Bereich des mechanischen Prüfkopfs 13 in bzw. an einem Prüfrahmen 15 angeordnet. Dabei kann die Bilderfassungseinheit 12 derart beabstandet bzw. benachbart zu dem Prüfkopf 13 angeordnet sein, sodass eine optische Erfassung der Werkstückprobe 100 ermöglicht ist. Es ist des Weiteren denkbar, dass die Bilderfassungseinheit 12 und/oder der mechanische Prüfkopf 13 translatorisch und/oder rotatorisch an den Prüfrahmen 15 beweglich angeordnet sind. Dementsprechend kann der mechanische Prüfkopf 13 und/oder die Bilderfassungseinheit 12 derart zueinander positioniert oder an dem Prüfrahmen 15 positioniert werden, dass ein Erzeugen eines Eindrucks 101 in der Werkstückprobe 100 und im Anschluss daran und/oder vor der Erzeugung eines Eindrucks 101 in der Werkstückprobe 100 die Bilderfassungseinheit 12 derart positioniert ist, dass die Werkstückgeometrie und/oder die Topografie des erzeugten Eindrucks 101 optisch erfassbar ist. An dem Prüfrahmen 15 der Messvorrichtung 10 ist darüber hinaus eine Antriebseinheit 14 angeordnet, wodurch zumindest tlw. eine Positionierung der Werkstückaufnahme 11, der Bilderfassungseinheit 12 und/oder dem Prüfkopf 13 zueinander durchführbar ist. Der Prüfkopf 13 sowie die Bilderfassungseinheit 12 sind an einem Werkzeugrevolver 17 angeordnet, sodass mittels der Antriebseinheit 14 der Prüfkopf 13 und/oder die Bilderfassungseinheit 12 vorzugsweise rotatorisch an dem Werkzeugrevolver 17 angeordnet sind. Dementsprechend kann über eine rotatorische Bewegung der Prüfkopf 13 und/oder die Bilderfassungseinheit 12 derart über der Werkstückprobe 100 positioniert werden, sodass entweder ein mechanischer Eindruck 101 vom Prüfkopf 13, insbesondere von der Prüfspitze 13.1, durchführbar ist oder die Geometrie und/oder Topografie der Werkstückprobe 100 bzw. des Eindrucks 101 erfassbar ist. Die Prüfspitze 13.1 ist an dem Prüfkopf 13 angeordnet und weist eine Prüfspitzengeometrie 13.2 auf, wobei die Prüfspitzengeometrie 13.2 vorzugsweise ein sphärokonischen Verlauf aufweist, welcher insbesondere einen rotatationssymmetrischen Eindruck 101 in der Werkstückprobe 100 erzeugt. In der Figur 1 weist der Prüfrahmen 15 darüber hinaus einen Prüftisch 16 auf, welcher horizontal und/oder vertikal beweglich, insbesondere durch die Antriebseinheit 14 positioniert werden kann. Dementsprechend kann die Antriebseinheit 14 den Werkzeugrevolver 17, insbesondere den Prüfkopf 13 mit der Prüfspitze 13.1 in Richtung Prüftisch 16 mit der in einer Werkstückaufnahme 11 angeordneten Werkstückprobe 100 bewegen und/oder der Prüftisch 16 wird über die Antriebseinheit 14 in Richtung Werkzeugrevolver 17 bewegt, sodass ein mechanischer Eindruck 101 in der Werkstückprobe 100 durch den Prüfkopf 13, insbesondere die Prüfspitze 13.1, durchführbar ist. Weiterhin weist die Messvorrichtung 10 eine Steuereinheit 18 auf, welche an dem Prüfrahmen 15 angeordnet ist, wobei über die Steuereinheit 18 eine Steuerung und/oder Regelung und/oder Auswertung von Daten der Bilderfassungseinheit 12 und der Antriebseinheit 14 durchführbar ist.

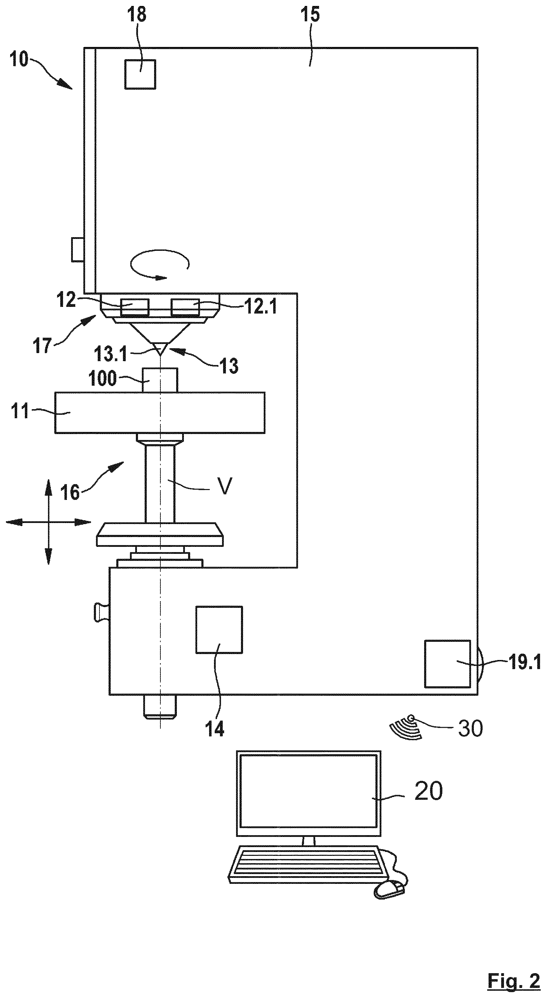

Die Figur 2 zeigt eine weitere Ausführungsform einer erfindungsgemäßen Messvorrichtung 10. Die Messvorrichtung 10 weist dabei einen im Wesentlichen liegenden U-förmigen Prüfrahmen 15 auf. An dem Prüfrahmen 15 ist eine Steuereinheit 18 zur Steuerung und/oder Regelung und/oder Auswertung von Daten der Bilderfassungseinheit 12 und der Antriebseinheit 14 angeordnet. Darüber hinaus weist die Messvorrichtung 10 in der Figur 2 einen Werkzeugrevolver 17 mit daran angeordneter Bilderfassungseinheit 12 und Lichtquelle 12.1 auf. Darüber hinaus weist der Werkzeugrevolver 17, welcher vorzugsweise rotatorisch bewegbar, insbesondere über die Antriebseinheit 14 antreibbar ist, einen Prüfkopf 13 mit einer daran angeordneten Prüfspitze 13.1 auf. Die Prüfspitze 13.1 weist dabei eine kegelförmige Prüfspitzengeometrie 13.2 auf, womit ein insbesondere rotationssymmetrischer Eindruck 101 in der Werkstückprobe 100 erzeugbar ist. Die Werkstückprobe 100 ist dafür in einer Werkstückaufnahme 11 an einem Prüftisch 16 fest angeordnet, wobei der Prüftisch 16 horizontal und/oder vertikal bewegbar an dem Prüfrahmen 15, insbesondere über die Antriebseinheit 14 antreibbar, angeordnet ist. In der Figur 2 ist darüber hinaus eine Schnittstelle 19.1 an der Messvorrichtung 10 angeordnet, wodurch Daten der Bilderfassungseinheit 12 und der Antriebseinheit 14 an eine beabstandete Elektronikeinheit 19 übertragen werden können. Bei der beabstandeten Elektronikeinheit 19 handelt es sich in Figur 2 um einen Computer, welcher bspw. über eine Bluetooth-, WLAN- oder vergleichbare elektromagnetische Übertragungsschnittstellen (z. B. RS 232 oder USB) mit der Messvorrichtung 10 verbunden ist.

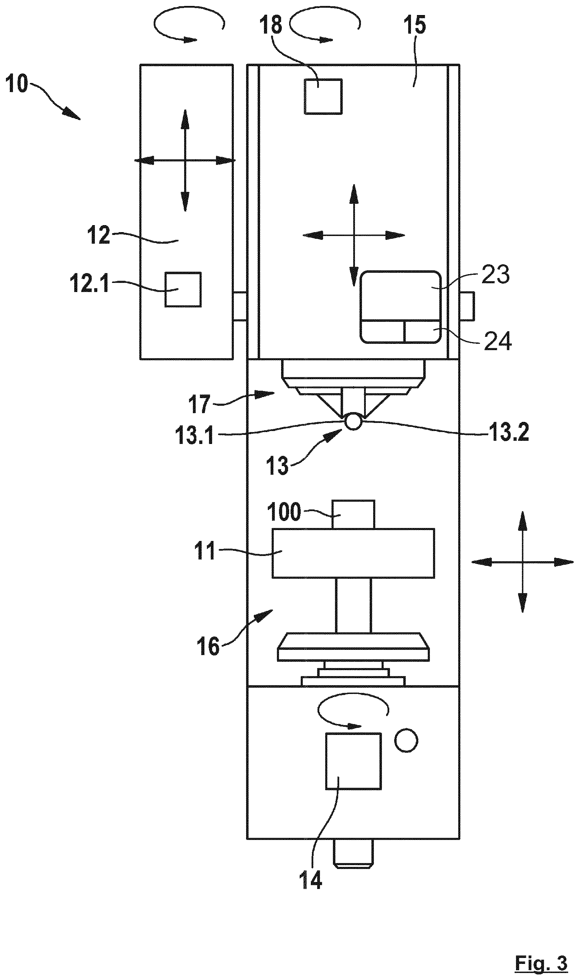

Die Figur 3 zeigt ein weiteres Ausführungsbeispiel der erfindungsgemäßen Messvorrichtung 10. Die Messvorrichtung 10 weist dabei einen Prüfrahmen 15 auf. An dem Prüfrahmen 15 sind eine Steuereinheit 18, ein Werkzeugrevolver 17 sowie eine Antriebseinheit 14 angeordnet. Über die Antriebseinheit 14 kann der Prüftisch 16 und/oder der Werkzeugrevolver 17 und/oder die Bilderfassungseinheit 12 translatorisch und/oder rotatorisch, insbesondere horizontal und/oder vertikal bewegt werden. Die Bilderfassungseinheit 12 ist in Figur 3 an einer Außenseite des Prüfrahmens 15 bewegbar angeordnet, wobei die Bilderfassungseinheit 12 derart an dem Prüfrahmen 15 bewegbar ist, dass die Bilderfassungseinheit 12 insbesondere und/oder vertikal zum Prüftisch 16 und/oder zum Werkzeugrevolver 17 bewegbar ist. Dafür kann bspw. die Bilderfassungseinheit 12 über eine Schiene und/oder einen beweglichen Arm an dem Prüfrahmen 15 angeordnet sein, sodass eine insbesondere geführte Bewegung entlang der Schiene und/oder entlang eines beweglichen Arms durchführbar ist. Die Bilderfassungseinheit 12 kann zur optischen Erfassung der Werkstückgeometrie und/oder der Eindrucktopographie 103 mittels der Lichtquelle 12.1 beleuchtet werden, wobei die Lichtquelle 12.1 bspw. ein optischer Sensor, ein Infrarotsensor, eine LED und/oder eine OLED sein kann. Der Werkzeugrevolver 17 weist einen Prüfkopf 13 mit einer Prüfspitze 13.1 auf, wobei die Prüfspitze 13.1 kugelförmig ausgebildet ist und einen mechanischen Eindruck 101 in der Werkstückprobe 100 erzeugen kann. Die Werkstückprobe 100 ist dabei an einer Werkstückaufnahme 11 an einem beweglich ausgebildeten Prüftisch 16 angeordnet. Der Prüftisch 16 kann dabei translatorisch, insbesondere horizontal und/oder vertikal als auch rotatorisch ausgebildet sein und über die Antriebseinheit 14 angetrieben werden. Dementsprechend kann die Antriebseinheit 14 dem Prüftisch 16 mit einem daran angeordneten Werkstückaufnahme 11 und der darin aufgenommenen Werkstückprobe 100 in Richtung Werkzeugrevolver 17 und somit zum Prüfkopf 13 und einer daran angeordneten Prüfspitze 13.1 mit einer Prüfspitzengeometrie 13.2 ermöglichen.

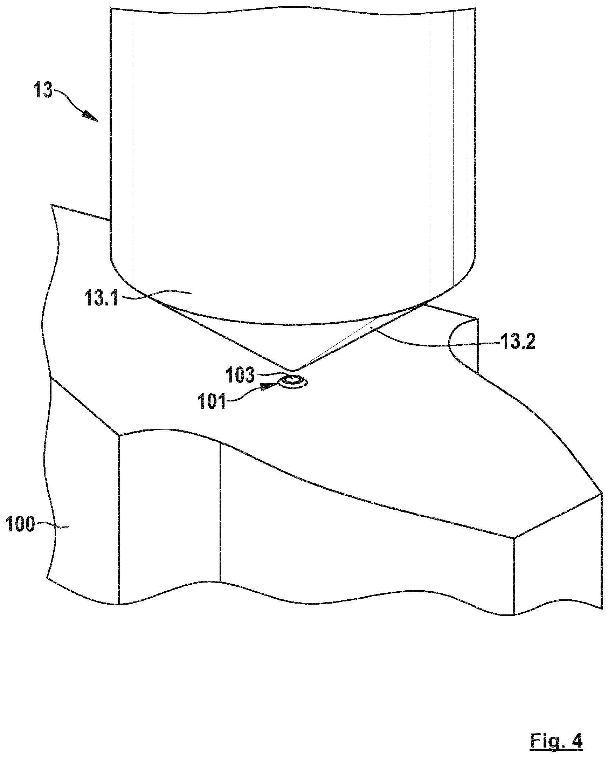

In der Figur 4 ist ein erfindungsgemäßer Prüfkopf 13 mit einer sphärokonischen Prüfspitzengeometrie 13.2 der Prüfspitze 13.1 gezeigt. Darüber hinaus zeigt Figur 4 eine Werkstückprobe 100 mit einem Eindruck 101, welcher durch die Prüfspitze 13.1 mit der Prüfspitzengeometrie 13.2 erzeugt wurde. Der Eindruck 101 weist hierbei eine Eindrucktopographie 103 auf, welche durch die Prüfspitze 13.1 mit der Prüfspitzengeometrie 13.2 erzeugt wurde. Die Eindrucktopographie 103 weist hierfür eine Eindrucktiefe 102 und einen Aufwurf umfangsseitig des Eindrucks 101 auf. Die charakteristische Eindrucktopographie 103, insbesondere ein Materialaufwurf der Eindrucktopographie 103, dient erfindungsgemäß zur Ermittlung von mechanischen Eigenschaften der Werkstückprobe 100.

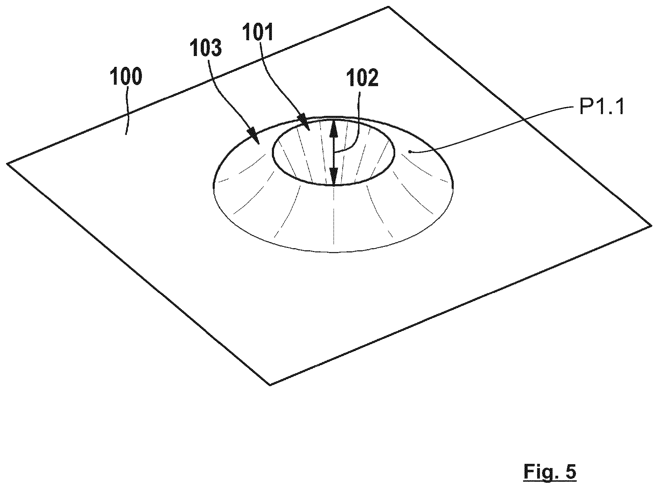

In der Figur 5 ist ein Eindruck 101 in einer Werkstückprobe 100 vergrößert gezeigt. Hierbei weist der Eindruck 101 eine Eindrucktiefe 102 und entsprechende Eindrucktopographie 103 auf. Die Eindrucktopographie 103 ergibt sich zum einen durch die Eindrucktiefe 102 bzw. dem von der Prüfspitze ausgeprägten Eindruck 101 sowie einen umfangsseitig an dem Eindruck 101 ausgebildeten Materialaufwurf. Die Eindrucktopographie 103 des Eindrucks 101 dient zur Materialparameterbestimmung der Werkstückprobe 100. Zur Ermittlung der Materialparameter dient erfindungsgemäß zum einen die Eindrucktiefe 102 sowie die Aufwurfhöhe des Materials der Werkstückprobe 100.

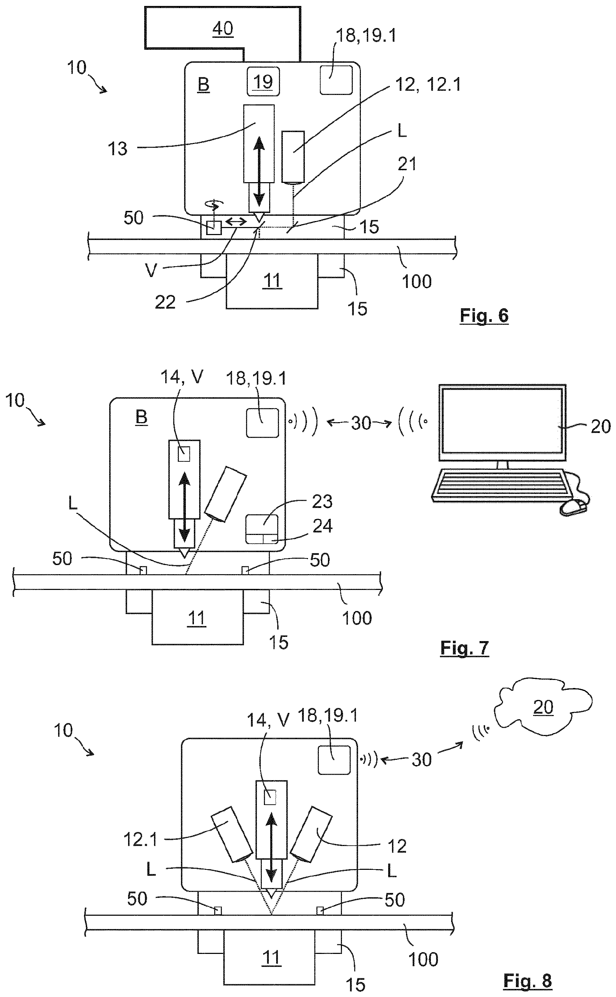

In den weiteren Figuren 6 - 11 sind schematische Ausgestaltungen der erfindungsgemäßen Messvorrichtung 10, insbesondere bei dem Einsatz von kontinuierlich ausgestalteten Werkstückproben, insbesondere in Form von Walzmaterial, Stangenmaterial und dergleichen, dargestellt. In diesen Figuren geht es insbesondere um die unterschiedlichen Anordnungsmöglichkeiten der Bilderfassungseinheit 12 und des mechanischen Prüfkopfs 13 in der Baueinheit B. Die Baueinheit B findet sich oberhalb der Werkstückprobe 100 und nimmt die Bilderfassungseinheit 12 und den mechanischen Prüfkopf 13 auf. Zusätzlich kann auch eine Umlenkeinheit U zur Ein- und Verstellung von Spiegeln 21, 22 vorgesehen sein, die ein Strahlengang L der Bilderfassungseinheit 12 umlenken können. Neben der integrierten Lichtquelle 12.1 in der Bilderfassungseinheit 12 kann auch eine externe Lichtquelle 12.1 bei der erfindungsgemäßen Messvorrichtung 10 zum Einsatz kommen.

Bei den Figuren 6 - 11 kann die Messvorrichtung 10 über einen Tragarm 40 bzw. einen Roboterarm 40 der Werkstückprobe 100 zugeführt werden. Idealerweise ist dieser Tragarm 40 direkt an dem Prüfrahmen 15 befestigt, um eine hohe Stabilität zu erzielen. Ferner ist optional eine Fixiereinheit 50 bei der Messvorrichtung 10 vorgesehen, wodurch diese mit der Werkstückprobe 100 fixierbar ist. Durch die Fixierheinheit 50 kann die Werkstückprobe zwischen der Werkstückaufnahme 11 eingeklemmt bzw. eingespannt werden, um eine Relativbewegung zwischen der Messvorrichtung 10 während des Messvorganges und der Werkstückprobe 100 sicher zu vermeiden.

Nachfolgend werden die Unterschiede der verschiedenen Ausgestaltungen erfindungsgemäßer Messvorrichtung 10 in den Figuren 6 - 11 beschrieben.

In der Figur 6 ist eine Umlenkeinheit U zum Umlenken des Strahlengangs L vorgesehen, sodass die Bilderfassungseinheit 12 und der mechanische Prüfkopf 13 starr zueinander angeordnet sein können und die Baueinheit B bilden. Dabei kann der erste Spiegel 21 fest an der Baueinheit B oder der Messvorrichtung 10 angeordnet sein. Der zweite Spiegel 22, der durch die Umlenkeinheit U bewegbar ist, kann durch eine Antriebseinheit 14 mit einem Verstellelement V unterhalb der Prüfspitze 13.1 geschwenkt werden, um die optische Messung vorzunehmen. Dabei kann der Spiegel 22 längs verschoben werden oder durch eine Drehung bewegt werden (s. Pfeile). Bei der Erzeugung des Eindrucks 101 muss der Spiegel 22 außerhalb des Wirkungskreises der Prüfspitze 13.1 angeordnet sein, wohingegen bei der optischen Erfassung der Eindrucktopographie 103 der zweite Spiegel 22 unterhalb der Prüfspitze 13.1 anzuordnen ist, um den Strahlengang L entsprechend umlenken zu können, damit die Bilderfassungseinheit 12 eine optische Erfassung der Eindrucktopographie 103 vornehmen kann. In der Figur 6 kann der mechanische Prüfkopf 13 komplett mit der Prüfspitze 13.1 vertikal verschoben werden, oder nur die Prüfspitze 13.1 kann aus dem Prüfkopf 13 durch ein Verstellelement V (z. B. Zylinder) herausfahrbar ausgestaltet sein.

In Figur 7 ist die Bilderfassungseinheit 12 diagonal zum mechanischen Prüfkopf 13 innerhalb der Baueinheit B angeordnet. Damit erhält die Bilderfassungseinheit 12 keine direkte Draufsicht auf die erzeugte Eindrucktopographie, sondern eine leichte Schrägansicht, die im weiteren Verfahren kompensiert werden muss, um zu exakten Messergebnissen zu gelangen. Ferner ist in Figur 7 eine Anzeigeeinheit 23 sowie eine Eingabeeinheit 24 angedeutet. Die Anzeigeeinheit 23 kann aus einem Display, insbesondere mit Touchscreen-Funktion, bestehen. Über diese Anzeigeeinheit 23 lassen sich z.B. Fehlerzustände oder Messergebnisse der Messvorrichtung 10 anzeigen und durch die Eingabevorrichtung 24 beeinflussen. Ebenfalls ist rein schematisch in Figur 7 die beabstandete Elektronikeinheit 20 als externer Server bzw. Rechner dargestellt.

In der Figur 8 kommt im Gegensatz zu Figur 7 eine zusätzliche Lichtquelle 12.1 zum Einsatz, die eben nicht in der Bilderfassungseinheit 12 integriert ist. Sowohl die Bilderfassungseinheit 12 als auch die Lichtquelle 12.1 sind diagonal zum mechanischen Prüfkopf 13 an der Baueinheit B angeordnet.

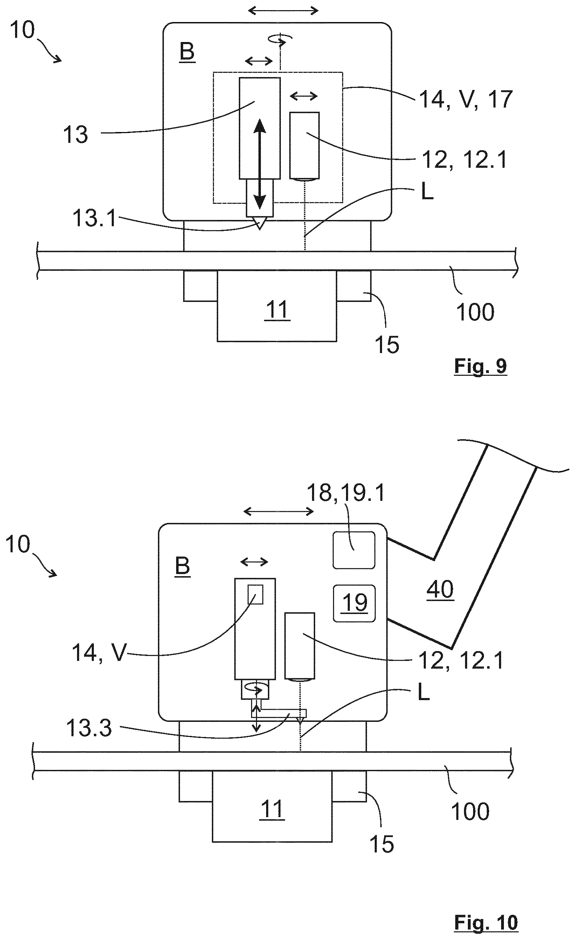

In der Figur 9 kann sowohl der mechanische Prüfkopf 13 als auch die Bilderfassungseinheit 12 durch die Antriebseinheit 14 mit einem entsprechenden Verstellelement V verschoben werden. Auch ist eine Relativbewegung zwischen der Bilderfassungseinheit 12 und dem mechanischen Prüfkopf 13 vorstellbar. Die Bewegung der entsprechenden Bauteile kann einerseits linear oder andererseits durch eine Drehbewegung und/oder Schwenkbewegung erfolgen. Auch ist es denkbar, dass die gesamte Baueinheit B durch eine Linearverschiebung und/oder Dreh- bzw. Schwenkverschiebung bewegbar ausgestaltet ist, um einerseits die Eindrucktopographie 103 zu erzeugen und andererseits diese dann in einer Draufsicht optisch und/oder taktil erfassen zu können.

In der Figur 10 weist der mechanische Prüfkopf 13 einen Prüfarm 13.3 auf, an dem unterseitig die Prüfspitze 13.1 angeordnet ist. Dieser Prüfarm 13.3 kann drehbar bzw. schwenkbar und/oder linear verstellbar sein, um somit die mechanische Eindrucktopographie 103 bei der Werkstückprobe 100 erzeugen zu können. Sobald diese tatsächliche Eindrucktopographie 103 durch den Eindruck 101 erstellt ist, kann der mechanische Prüfkopf 13 den Prüfarm 13.3 oberhalb des Eindrucks 101 wegschwenken, sodass die Bilderfassungseinheit 12 eine Draufsicht auf die Eindrucktopographie 103 erhält.

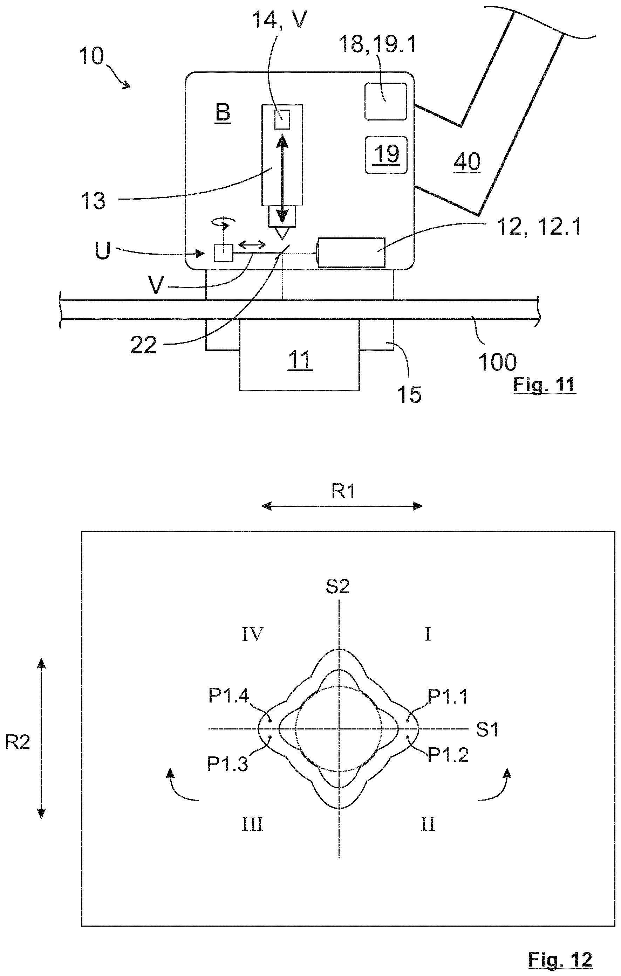

In der Figur 11 kommt im Gegensatz zu der Messvorrichtung 10 aus der Figur 6 eine Umlenkeinheit U zum Einsatz, die nur einen Spiegel 22 aufweist, um den Strahlengang L umzulenken. Hierzu ist die Bilderfassungseinheit 12 zumindest diagonal oder wie im vorliegenden Fall um 90° gedreht zum mechanischen Prüfkopf 13 an der Baueinheit B angeordnet. Der Spiegel 22 kann durch die Umlenkeinheit U, wie in Figur 6 gedreht, durch das Verstellelement V geschwenkt oder linear verschoben werden.

In den Figuren 6 - 11 sind die unterschiedlichen Bewegungsmöglichkeiten translatorisch, in Dreh- und Schwenkrichtung durch entsprechende Pfeile angeordnet. Durch diese Bewegungsmöglichkeiten kann der Eindruck 101 mit seiner tatsächlichen Eindrucktopographie 103 in der Werkstückprobe 100 erzeugt werden und anschließend eine optische und/oder taktile Erfassung stattfinden. In den Figuren 6, 10 und 11 ist ein Tragarm 40 bzw. ein Roboterarm 40 zur beweglichen Zuführung der Messvorrichtung 10 zur Werkstückprobe 100 schematisch angedeutet.

In der weiteren Figur 12 ist rein schematisch eine Draufsicht auf eine Eindrucktopographie 103 bei einer anisotropen Werkstückprobe 100 dargestellt. Diese weist eben keine rotationssymmetrische Ausgestaltung auf, wie sie in der Figur 5 bei isotropen Materialien angedeutet ist. Im vorliegenden Fall ähnelt die Eindrucktopographie 103 des Eindrucks 101 in der Draufsicht einem Kleeblatt. Diese Eindrucktopographie 103 weist insgesamt zwei Symmetrieachsen S1 und S2 auf, wodurch sich die Teilstücke I - IV bilden lassen. Es sei an dieser Stelle erwähnt, dass auch nur eine Symmetrieachse S1 oder mehrere Symmetrieachsen vorhanden sein können. Außerdem sind die Punkte P1.1 - P1.4 angedeutet, die über die gleichen Höheninformationen der Eindrucktopographie 103 verfügen und durch Umklappen bzw. Spiegeln in Teilstücke aufeinander zu liegen kommen. Dieses ist durch die Klapppfeile in der Figur 12 in den Teilbereichen II und III angedeutet, die ein Hochklappen der Teilstücke II und III anhand der Symmetrieachse S1 auf die Teilstücke I und IV erzeugt werden können.

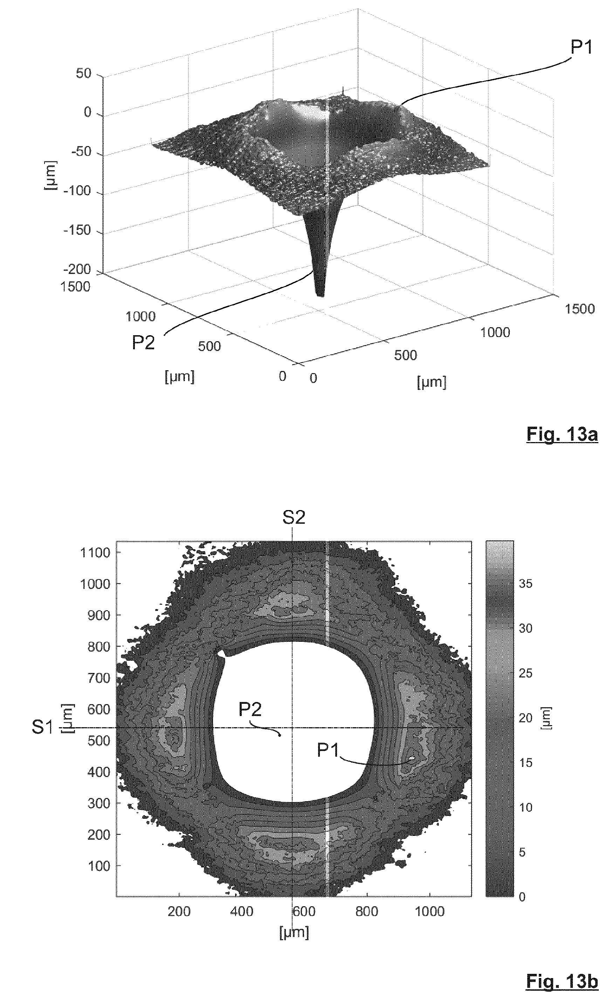

In den Figuren 13a und 13b sind die erhaltenen Messdaten aus Schritt c) in einem dreidimensionalen Koordinatensystem angeordnet. Der Eindruck 101 wurde in eine Werkstückprobe 100 aus einer Aluminiumlegierung eingebracht. Hieraus wird deutlich, dass zu jedem zweidimensionalen Punkt P eine Höheninformation gespeichert wird, so dass sich das dreidimensionale Modell der Eindrucktopographie in Figur 13a mit den Punkten P1 und P2 ergibt. Das entsprechende zweidimensionale Modell mit den Punkten P1 und P2 ist in der Figur 13b dargestellt, wobei die einzelnen Punkte neben ihren x- und y-Koordinaten auch noch Höheninformationen aufweisen, um somit die dreidimensionale Eindrucktopographie 103 mathematisch darstellen zu können. Diese Höheninformationen sind in den Figuren 13a und 13b durch die unterschiedlichen Grauschattierungen zum Ausdruck gebracht.

Die voranstehende Erläuterung der Ausführungsformen beschreibt die vorliegende Erfindung ausschließlich im Rahmen von Beispielen. Selbstverständlich können einzelne Merkmale der vorliegenden Erfindung, sofern technisch sinnvoll, frei miteinander kombiniert werden, ohne den Rahmen der vorliegenden Erfindung / Ansprüche zu verlassen.

### Bezugszeichenliste

- 10: Messvorrichtung
- 11: Werkstückaufnahme
- 12: Bilderfassungseinheit
- 12.1: Lichtquelle
- 13: Prüfkopf
- 13.1: Prüfspitze
- 13.2: Prüfspitzengeometrie
- 13.3: Prüfarm
- 14: Antriebseinheit
- 15: Prüfrahmen
- 16: Prüftisch
- 17: Werkzeugrevolver
- 18: Steuereinheit
- 19: Elektronikeinheit
- 19.1: Schnittstelle zu 19
- 20: beabstandete Elektronikeinheit, wie z.B. externer Server und/oder Cloud
- 21: Spiegel, insbesondere feststehend
- 22: Spiegel, insbesondere verstellbar durch U
- 23: Anzeigeeinheit, Display
- 24: Eingabeeinheit, Tasten / Touchscreen

- 30: Datenverbindung, drahtlos oder kabelgebunden
- 40: Roboter- oder Tragarm
- 50: Fixiereinheit

- 100: Werkstückprobe
- 101: Eindruck
- 102: Eindrucktiefe
- 103: Eindrucktopographie
- B: Baueinheit
- V: Verstellelement
- U: Umlenkeinheit
- L: Strahlengang
- S1, S2: Symmetrieachsen von 103
- I - IV: Teilstücke von 103
- R1, R2: Richtungen
- Px.y: Punkte, insbesondere Messpunkte von 103 in den Teilstücken

## Patentansprüche

1. Verfahren zur Ermittlung von zumindest zwei mechanischen Eigenschaften einer Werkstückprobe (100), die zumindest zwei mechanischen Eigenschaften umfassend Streckgrenze, Verfestigungsverhalten, Duktilität, Zugfestigkeit, Verformungsvermögen, Bruchdehnung und/oder Druckfestigkeit, wobei in dem Verfahren die folgenden Schritte automatisch ablaufen:
a) Optische und/oder taktile dreidimensionale Erfassung einer Werkstückgeometrie der Werkstückprobe (100),
b) Erzeugen eines Eindrucks (101) durch Eindringen eines Prüfkopfes (13), insbesondere einer Prüfspitze (13.1) in die Werkstückprobe (100) mit definierten Prüfbedingungen,
c) Optische und/oder taktile dreidimensionale Erfassung einer Eindrucktopographie (103) des erzeugten Eindrucks (101) in der Werkstückprobe (100),
d) Insbesondere computerbasierte Simulation einer theoretischen Eindrucktopographie (103) unter Verwendung eines Materialmodells, insbesondere eines elastoplastischen Materialmodells, vorzugsweise für anisotrope Materialien,
e) Vergleich der simulierten und der erzeugten Eindrucktopographie (103),
f) Ermittlung der mechanischen Eigenschaften der Werkstückprobe (100) in Abhängigkeit der Schritte a) bis e),
wobei im Schritt e) Daten von vorsimulierten Eindrucktopographien (103) Verwendung finden, wobei diese Daten in einem Speicher und/oder einer Datenbank abgelegt sind.

2. Verfahren nach einem der vorhergehenden Ansprüche,
**dadurch gekennzeichnet,**
**dass** in einem Schritt b2) zumindest ein erneutes Eindringen des Prüfkopfes (13), insbesondere einer Prüfspitze (13.1) in die Werkstückprobe (100) durchgeführt wird,
wobei insbesondere Schritt c) folgt, um die Erfassung der jeweiligen Eindrucktopographie (103) des erzeugten Eindrucks (101) in der Werkstückprobe (100) vorzunehmen.

3. Verfahren nach einem der vorhergehenden Ansprüche,
**dadurch gekennzeichnet,**
**dass** in einem Schritt c2) die erfasste Werkstückgeometrie der Werkstückprobe (100) aus Schritt a) bei der tatsächlichen Erfassung der Eindrucktopographie (103) des erzeugten Eindrucks (101) in der Werkstückprobe (100) berücksichtigt wird,
um insbesondere Krümmungen oder Durchbiegung der Werkstückprobe (100) zu eliminieren,
und/oder dass im Schritt c) eine Erfassung einer insbesondere vollständigen Eindrucktopographie (103) des erzeugten Eindrucks (101) in der Werkstückprobe (100) stattfindet,
wobei insbesondere anschließend eine geometrische Teilung der Eindrucktopographie (103) des erzeugten Eindrucks (101) in der Werkstückprobe (100), vorzugsweise durch Ermittlung von zumindest einer Symmetrieachse (S1, S2) erfolgt.

4. Verfahren nach einem der vorhergehenden Ansprüche,
**dadurch gekennzeichnet,**
**dass** vor oder im Schritt d) eine Bestimmung von Teilstücken (I, II, III, IV), von der Eindrucktopographie (103) des erzeugten Eindrucks (101) in der Werkstückprobe (100), vorzugsweise anhand der ermittelten Symmetrieachse (S1, S2), erfolgt,
wobei insbesondere Teilstücke (I, II, III, IV), vorzugsweise mit Winkeln von 45°, 90° oder 180°, verwendbar sind,
und/oder dass im Schritt d) zumindest eine FEM-Simulation (Finite-Elemente-Methode) einer theoretischen Eindrucktopographie (103) unter Verwendung des Materialmodells erfolgt,
und/oder dass zu jedem durchgeführten Schritt d) ein Schritt c) durchgeführt wird und anschließend jeweils ein Schritt e) und/oder Schritt d) erfolgt.

5. Verfahren nach einem der vorhergehenden Ansprüche,
**dadurch gekennzeichnet,**
**dass** zumindest für Schritt d) und/oder e) Verfahren der künstlichen Intelligenz zum Einsatz kommen,
wobei insbesondere lernende Verfahren, vorzugsweise "deep-learning"- und/oder Neuronale Netze-Verfahren, Verwendung finden, und/oder
das in einem weiteren Schritt g) eine Korrektur zwischen der erfassten Eindrucktopographien (103) und der simulierten Eindrucktopographien (103) stattfindet.

6. Verfahren nach einem der vorhergehenden Ansprüche,
**dadurch gekennzeichnet,**
**dass** eine Anwendung des Verfahrens auch bei anisotropen Werkstückproben (100) zum Einsatz kommt,
wobei insbesondere richtungsabhängige Eigenschaften der Werkstückprobe (100), wie beispielsweise Fließgrenzen/Dehngrenzen, Zugfestigkeiten, Duktilitäten und/oder Bruchdehnungen, ermittelbar sind.

7. Verfahren nach einem der vorhergehenden Ansprüche,
**dadurch gekennzeichnet,**
**dass** bei gewalzten, stranggepressten, gegossenen und/oder gezogenen Werkstückproben (100) richtungsabhängige Eigenschaften des Materials messbar sind, und /oder
**dass** eine Messung des Messverfahrens pro Werkstückprobe (Zeitspanne für eine Messung) kleiner als 14 Sekunden, bevorzugt kleiner als 12 Sekunden und besonders bevorzugt kleiner als 8 Sekunden dauert.

8. Messvorrichtung (10) zur Ermittlung von zumindest zwei mechanischen Eigenschaften einer Werkstückprobe (100), wobei die Messvorrichtung (10) zur Ausführung des Verfahrens nach einem der Ansprüche 1 bis 7 ausgestaltet ist.

9. Computerprogrammprodukt für eine Messvorrichtung (10) zur Ermittlung von mechanischen Eigenschaften einer Werkstückprobe (100) nach Anspruch 8,
**dadurch gekennzeichnet,**
**dass** das Programm einen Algorithmus und/oder eine Heuristik aufweist, der von einer Elektronikeinheit (19) abgearbeitet wird,
wobei der Algorithmus und/oder die Heuristik das Verfahren gemäß einem der vorherigen Ansprüche 1 bis 7 implementiert.

## Claims

1. Method for determining at least two mechanical properties of a workpiece sample (100), the at least two mechanical properties comprising yield strength, hardening behavior, ductility, tensile strength, deformation capacity, elongation at break and/or compressive strength, in which method the following steps are carried out automatically:
a) optical and/or tactile three-dimensional detection of a workpiece geometry of the workpiece sample (100),
b) creating an indentation (101) by penetrating a test head (13), in particular a test tip (13.1), into the workpiece sample (100) with defined test conditions,
c) optical and/or tactile three-dimensional detection of an indentation topography (103) of the indentation (101) produced in the workpiece sample (100),
d) in particular, computer-based simulation of a theoretical indentation topography (103) using a material model, in particular an elastoplastic material model, preferably for anisotropic materials,
e) comparison of the simulated and generated indentation topography (103),
f) determination of the mechanical properties of the workpiece sample (100) as a function of steps a) to e),
wherein in step e) data from pre-simulated indentation topographies (103) are used, said data being stored in a memory and/or a database.

2. Method according to any one of the preceding claims,
**characterized in that**
in a step b2) at least one renewed penetration of the test head (13), in particular of a test tip (13.1), into the workpiece sample (100) is carried out,
wherein in particular step c) follows in order to carry out the detection of the respective indentation topography (103) of the indentation (101) produced in the workpiece sample (100).

3. Method according to any one of the preceding claims,
**characterized in that**
in a step c2), the detected workpiece geometry of the workpiece sample (100) from step a) is taken into account in the actual detection of the indentation topography (103) of the indentation (101) produced in the workpiece sample (100),
in particular to eliminate curvature or deflection of the workpiece sample (100),
and/or that in step c) a detection of a particularly complete indentation topography (103) of the indentation (101) produced in the workpiece sample (100) takes place,
wherein, in particular, a geometric division of the indentation topography (103) of the indentation (101) produced in the workpiece sample (100) is then carried out, preferably by determining at least one axis of symmetry (S1, S2).

4. Method according to any one of the preceding claims,
**characterized in that**
before or in step d), partial sections (I, II, III, IV) of the indentation topography (103) of the indentation (101) produced in the workpiece sample (100) are determined, preferably on the basis of the determined symmetry axis (S1, S2),
whereby in particular partial sections (I, II, III, IV), preferably with angles of 45°, 90° or 180°, can be used,
and/or that in step d) at least one FEM simulation (finite element method) of a theoretical indentation topography (103) is carried out using the material model,
and/or that a step c) is carried out for each step d) carried out and then a step e) and/or step d) is carried out in each case.

5. Method according to any one of the preceding claims,
**characterized in that**
artificial intelligence methods are used at least for step d) and/or e),
wherein in particular learning methods, preferably "deep-learning" and/or neural network methods, are used, and/or
that in a further step g) a correction takes place between the recorded indentation topographies (103) and the simulated indentation topographies (103).

6. Method according to any one of the preceding claims,
**characterized in that**
the method can also be used for anisotropic workpiece samples (100),
whereby, in particular, direction-dependent properties of the workpiece sample (100), such as yield points/strain limits, tensile strengths, ductilities and/or elongations at break, can be determined.

7. Method according to any one of the preceding claims,
**characterized in that**
in the case of rolled, extruded, cast and/or drawn workpiece samples (100), direction-dependent properties of the material can be measured, and/or
that one measurement of the measuring method per workpiece sample (time span for one measurement) takes less than 14 seconds, preferably less than 12 seconds and particularly preferably less than 8 seconds.

8. Measuring device (10) for determining at least two mechanical properties of a workpiece sample (100), wherein the measuring device (10) is designed to carry out the method according to one of claims 1 to 7.

9. Computer program product for a measuring device (10) for determining mechanical properties of a workpiece sample (100) according to claim 8,
**characterized in that,**
the program has an algorithm and/or a heuristic which is processed by an electronic unit (19),
wherein the algorithm and/or the heuristic implements the method according to any one of the previous claims 1 to 7.

## Revendications

1. Procédé de détermination d'au moins deux propriétés mécaniques d'un échantillon de pièce (100), les au moins deux propriétés mécaniques comprenant la limite d'élasticité, le comportement de solidification, la ductilité, la résistance à la traction, la capacité de déformation, l'allongement à la rupture et/ou la résistance à la compression, les étapes suivantes se déroulant automatiquement dans le procédé :
a) détection tridimensionnelle optique et/ou tactile d'une géométrie de pièce de l'échantillon de pièce (100),
b) création d'une empreinte (101) par pénétration d'une tête de contrôle (13), en particulier d'une pointe de contrôle (13.1) dans l'échantillon de pièce (100) avec des conditions de contrôle définies,
c) détection optique et/ou tactile tridimensionnelle d'une topographie d'empreinte (103) de l'empreinte générée (101) dans l'échantillon de pièce (100),
d) simulation, en particulier par ordinateur, d'une topographie d'empreinte théorique (103) en utilisant un modèle de matériau, en particulier un modèle de matériau élastoplastique, de préférence pour des matériaux anisotropes,
e) comparaison de la topographie d'empreinte simulée et générée (103),
f) détermination des propriétés mécaniques de l'échantillon de pièce (100) en fonction des étapes a) à e),
dans lequel, à l'étape e), on utilise des données de topographies d'empreintes présimulées (103), ces données étant stockées dans une mémoire et/ou une base de données.

2. Procédé selon l'une quelconque des revendications précédentes,
**caractérisé en ce que**
dans une étape b2), au moins une nouvelle pénétration de la tête de contrôle (13), en particulier d'une pointe de contrôle (13.1), est effectuée dans l'échantillon de pièce (100), l'étape c) étant notamment suivie de la détection de la topographie d'empreinte respective (103) de l'empreinte générée (101) dans l'échantillon de pièce (100).

3. Procédé selon l'une quelconque des revendications précédentes,
**caractérisé en ce que**
dans une étape c2), la géométrie de pièce détectée de l'échantillon de pièce (100) de l'étape a) est prise en compte lors de la détection effective de la topographie d'empreinte (103) de l'empreinte (101) générée dans l'échantillon de pièce (100),
afin d'éliminer notamment les courbures ou les fléchissements de l'échantillon de pièce (100),
et/ou **en ce que**, à l'étape c), une détection d'une topographie d'empreinte (103), en particulier complète, de l'empreinte (101) générée a lieu dans l'échantillon de pièce (100),
une division géométrique de la topographie d'empreinte (103) de l'empreinte (101) générée dans l'échantillon de pièce (100), de préférence par détermination d'au moins un axe de symétrie (S1, S2), étant notamment effectuée ensuite.

4. Procédé selon l'une quelconque des revendications précédentes,
**caractérisé en ce qu'**
avant ou à l'étape d), une détermination de parties (I, II, III, IV), de la topographie d'empreinte (103) de l'empreinte (101) générée dans l'échantillon de pièce (100), est effectuée, de préférence à l'aide de l'axe de symétrie (S1, S2) déterminé,
des parties (I, II, III, IV), de préférence avec des angles de 45°, 90° ou 180°, pouvant notamment être utilisées,
et/ou **en ce que**, à l'étape d), au moins une simulation FEM (méthode des éléments finis) d'une topographie d'empreinte théorique (103) est effectuée en utilisant le modèle de matériau,
et/ou **en ce que**, pour chaque étape d) exécutée, une étape c) est exécutée, suivie à chaque fois d'une étape e) et/ou d'une étape d).

5. Procédé selon l'une quelconque des revendications précédentes,
**caractérisé en ce qu'**
au moins pour l'étape d) et/ou e), on utilise des procédés d'intelligence artificielle,
en utilisant notamment des procédés d'apprentissage, de préférence des procédés d'"apprentissage profond" et/ou de réseaux neuronaux, et/ou
**en ce que**, dans une étape supplémentaire g), une correction a lieu entre les topographies d'empreinte (103) détectées et les topographies d'empreinte (103) simulées.

6. Procédé selon l'une quelconque des revendications précédentes,
**caractérisé en ce qu'**
une application du procédé est également utilisée pour des échantillons de pièces anisotropes (100),
des propriétés dépendant de la direction de l'échantillon de pièce (100), comme par exemple des limites d'écoulement/d'allongement, des résistances à la traction, des ductilités et/ou des allongements à la rupture, pouvant notamment être déterminées.

7. Procédé selon l'une quelconque des revendications précédentes,
**caractérisé en ce que**
pour des échantillons de pièces (100) laminés, extrudés, coulés et/ou étirés, des propriétés du matériau dépendant de la direction peuvent être mesurées, et/ou
qu'une mesure du procédé de mesure par échantillon de pièce (durée pour une mesure) dure moins de 14 secondes, de préférence moins de 12 secondes et de manière particulièrement préférée moins de 8 secondes.

8. Dispositif de mesure (10) pour déterminer au moins deux propriétés mécaniques d'un échantillon de pièce (100), le dispositif de mesure (10) étant configuré pour mettre en oeuvre le procédé selon l'une des revendications 1 à 7.

9. Produit de programme informatique pour un dispositif de mesure (10) destiné à déterminer des propriétés mécaniques d'un échantillon de pièce (100) selon la revendication 8,
**caractérisé en ce que,**
le programme présente un algorithme et/ou une heuristique qui est traité par une unité électronique (19),
dans lequel l'algorithme et/ou l'heuristique met en oeuvre le procédé selon l'une quelconque des revendications 1 à 7 précédentes.
